(19) Europäisches Patentamt
European Patent Office
Office européen des brevets

(11) **EP 3 464 438 B1**

(12) **EUROPÄISCHE PATENTSCHRIFT**

(45) Veröffentlichungstag und Bekanntmachung des Hinweises auf die Patenterteilung:
**31.08.2022   Patentblatt 2022/35**

(21) Anmeldenummer: **17724042.1**

(22) Anmeldetag: **17.05.2017**

(51) Internationale Patentklassifikation (IPC):
*C08J 9/36* (2006.01)    *B29C 44/56* (2006.01)
*C08L 75/08* (2006.01)    *B32B 5/18* (2006.01)
*B32B 5/24* (2006.01)    *B32B 7/08* (2019.01)

(52) Gemeinsame Patentklassifikation (CPC):
(C-Sets verfügbar)
**C08J 9/36; B32B 5/022; B32B 5/024; B32B 5/026; B32B 5/18; B32B 5/24; B32B 5/245; B32B 27/065; B32B 27/30; B32B 27/308; B32B 27/34; B32B 27/36; B32B 27/38; B32B 27/40; B32B 29/007;**          (Forts.)

(86) Internationale Anmeldenummer:
**PCT/EP2017/061891**

(87) Internationale Veröffentlichungsnummer:
**WO 2017/202672 (30.11.2017 Gazette 2017/48)**

(54) **FASERVERSTÄRKUNG VON SCHAUMSTOFFEN**

FIBRE REINFORCEMENT OF FOAMS

RENFORCEMENT PAR FIBRES DE MOUSSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2016   EP 16171422**

(43) Veröffentlichungstag der Anmeldung:
**10.04.2019   Patentblatt 2019/15**

(73) Patentinhaber: **BASF SE**
**67056 Ludwigshafen (DE)**

(72) Erfinder:
• **STEIN, Robert**
**67056 Ludwigshafen (DE)**
• **TOMASI, Gianpaolo**
**49448 Lemfoerde (DE)**
• **WINDELER, Ludwig**
**49448 Lemfoerde (DE)**
• **RENNER, Christian**
**49448 Lemfoerde (DE)**
• **RUCKDAESCHEL, Holger**
**67056 Ludwigshafen (DE)**
• **DIEHLMANN, Tim**
**67056 Ludwigshafen (DE)**
• **ARBTER, Rene**
**67056 Ludwigshafen (DE)**
• **MARTIN, Marc Claude**
**49448 Lemfoerde (DE)**

(74) Vertreter: **BASF IP Association**
**BASF SE**
**G-FLP-C006**
**67056 Ludwigshafen (DE)**

(56) Entgegenhaltungen:
WO-A1-2006/125561     US-A- 3 030 256
US-A1- 2010 196 652     US-B1- 6 187 411

(52) Gemeinsame Patentklassifikation (CPC): (Forts.)
**C08G 18/1816; C08G 18/1833; C08G 18/2036;**
**C08G 18/3206; C08G 18/48; C08J 9/141;**
**C08J 9/146;** B29C 44/5663; B29C 44/5681;
B29C 44/569; B29K 2105/12; B29K 2105/14;
B29K 2705/00; B29K 2995/0097; B29L 2031/08;
B29L 2031/30; B32B 2250/40; B32B 2260/023;
B32B 2260/046; B32B 2262/02; B32B 2262/0238;
B32B 2262/0253; B32B 2262/0261;
B32B 2262/0269; B32B 2262/0276;
B32B 2262/0292; B32B 2262/065; B32B 2262/10;
B32B 2262/101; B32B 2262/105; B32B 2262/106;

B32B 2307/50; B32B 2307/554; B32B 2307/72;
B32B 2307/732; B32B 2603/00; B32B 2605/08;
B32B 2605/10; B32B 2605/12; B32B 2605/18;
C08G 2110/0025; C08G 2110/005; C08J 2201/022;
C08J 2203/142; C08J 2203/162; C08J 2205/052;
C08J 2375/08; Y02E 10/74

C-Sets
**C08G 18/12, C08G 18/6674;**
**C08G 18/12, C08G 18/7664**

**Beschreibung**

Die vorliegende Erfindung betrifft einen Formkörper aus Schaumstoff, wobei sich mindestens eine Faser (F) teilweise innerhalb des Formkörpers befindet, also vom Schaumstoff umschlossen ist. Die beiden nicht vom Schaumstoff umschlossenen Enden der jeweiligen Faser (F) ragen somit aus jeweils einer Seite des Formkörpers heraus. Der Schaumstoff wird hergestellt durch Polymerisation einer reaktiven Mischung (rM), die mindestens eine Verbindung mit gegenüber Isocyanaten reaktiven Gruppen, mindestens ein Treibmittel, und mindestens ein Polyisocyanat enthält.

Ein weiterer Gegenstand der vorliegenden Erfindung ist ein Paneel, das mindestens einen solchen Formkörper sowie mindestens eine weitere Schicht (S1) umfasst. Weitere Gegenstände der vorliegenden Erfindung sind Verfahren zur Herstellung der erfindungsgemäßen Formkörper aus Schaumstoff bzw. der erfindungsgemäßen Paneele sowie deren Verwendung, beispielsweise als Rotorblatt in Windenergieanlagen.

WO 2006/125561 betrifft ein Verfahren zur Herstellung von einem verstärkten zellulären Material, wobei in einem ersten Verfahrensschritt im zellulären Material mindestens ein Loch erzeugt wird, das sich von einer ersten Oberfläche zu einer zweiten Oberfläche des zellulären Materials erstreckt. Auf der anderen Seite der zweiten Oberfläche des zellulären Materials wird mindestens ein Faserbündel bereitgestellt, wobei dieses Faserbündel mit einer Nadel durch das Loch auf die erste Seite des zellulären Materials gezogen wird. Bevor die Nadel das Faserbündel fasst, wird die Nadel jedoch zunächst von der ersten Seite des zellulären Materials kommend durch das jeweilige Loch gezogen. Weiterhin befindet sich das Faserbündel mit Abschluss des Verfahrens gemäß WO 2006/125561 teilweise innerhalb des zellulären Materials, da es das entsprechende Loch ausfüllt, teilweise ragt das entsprechende Faserbündel auf den jeweiligen Seiten aus der ersten sowie zweiten Oberfläche des zellulären Materials heraus.

Durch das in WO 2006/125561 beschriebene Verfahren können sandwichartige Komponenten hergestellt werden, die einen Kern aus besagtem zellulären Material sowie mindestens ein Faserbündel umfassen. An den Oberflächen dieses Kernes können Harzschichten und faserverstärkte Harzschichten aufgebracht werden, um die eigentliche sandwichartige Komponente herzustellen. Als zelluläres Material zur Ausbildung des Kerns der sandwichartigen Komponente können beispielsweise Polyvinylchloride oder Polyurethane eingesetzt werden. Als Faserbündel kommen beispielsweise Kohlenstofffasern, Nylonfasern, Glasfasern oder Polyesterfasern in Frage.

WO 2006/125561 offenbart jedoch nicht, dass Schaumstoffe, die durch Polymerisation einer reaktiven Mischung hergestellt werden, als zelluläres Material zur Herstellung eines Kerns in einer sandwichartigen Komponente verwendet werden können. Die sandwichartigen Komponenten gemäß WO 2006/125561 eignen sich zur Verwendung im Flugzeugbau.

WO 2011/012587 betrifft ein weiteres Verfahren zur Herstellung eines Kerns mit integrierten Brückenfasern für Paneele aus Kompositmaterialien. Der Kern wird hergestellt, indem durch einen so genannten "Kuchen" aus Leichtmaterial die auf einer Oberfläche des entsprechenden Kuchens bereitgestellten Brückenfasern mit Hilfe einer Nadel teilweise oder vollständig durchgezogen werden. Der "Kuchen" kann aus Polyurethanschäumen, Polyesterschäumen, Polyethylenterephthalatschäumen, Polyvinylchloridschäumen oder einem phenolischen Schaum, insbesondere aus einem Polyurethanschaum ausgebildet sein. Als Fasern können prinzipiell jegliche Art von einfachen oder mehrfachen Fäden sowie sonstige Garne verwendet werden.

Die so hergestellten Kerne können wiederum Bestandteil eines Paneels aus Kompositmaterialien sein, wobei der Kern einseitig oder zweiseitig von einer Harzmatrix und Kombinationen aus Harzmatrizes mit Fasern in einer sandwichartigen Ausgestaltung umgeben ist. WO 2011/012587 offenbart jedoch nicht, dass Schaumstoffe, die durch Polymerisation einer reaktiven Mischung hergestellt werden, zur Herstellung des entsprechenden Kernmaterials eingesetzt werden können.

WO 2012/138445 betrifft ein Verfahren zur Herstellung eines Komposit-Kernpaneels unter Verwendung einer Vielzahl von länglichen Streifen aus einem zellulären Material mit einer niedrigen Dichte. Zwischen die jeweiligen Streifen wird eine doppellagige Fasermatte eingebracht, die unter Verwendung von Harz ein Verkleben der einzelnen Streifen unter Ausbildung der Komposit-Kernpaneele bewirkt. Das zelluläre Material mit niedriger Dichte, das die länglichen Streifen ausbildet, ist gemäß WO 2012/138445 ausgewählt aus Balsaholz, elastischen Schäumen und faserverstärkten Kompositschäumen. Bei den doppellagig zwischen den einzelnen Streifen eingebrachten Fasermatten kann es sich beispielsweise um eine poröse Glasfasermatte handeln. Das als Kleber verwendete Harz kann beispielsweise ein Polyester, ein Epoxy- oder ein phenolisches Harz sein oder ein durch Wärme aktivierter Thermoplast, beispielsweise Polypropylen oder PET. WO 2012/138445 offenbart jedoch nicht, dass als zelluläres Material für die verlängerten Streifen auch ein Schaumstoff, der durch Polymerisation einer reaktiven Mischung hergestellt wird, verwendet werden kann. Ebenso wenig ist darin offenbart, dass einzelne Fasern oder Faserbündel in das zelluläre Material zur Verstärkung eingebracht werden können.

Gemäß WO 2012/138445 werden hierfür ausschließlich Fasermatten eingesetzt, die zudem ein Verbindungsglied im Rahmen einer Verklebung der einzelnen Streifen mittels Harz unter Erhalt des Kernmaterials darstellen.

GB-A 2 455 044 offenbart ein Verfahren zur Herstellung eines mehrschichtigen Kompositartikels, wobei in einem ersten Verfahrensschritt eine Vielzahl von Pellets aus thermoplastischem Material sowie einem Treibmittel bereitgestellt werden. Das thermoplastische Material ist ein Gemisch aus Polystyrol (PS) und Polyphenylenoxid (PPO), das mindestens 20 bis 70 Gew.-% PPO enthält. In einem zweiten Verfahrensschritt werden die Pellets expandiert und in einem dritten Schritt in einer Form unter Ausbildung eines geschlossenzelligen Schaums aus dem thermoplastischen Material zu einem Formkörper verschweißt, wobei der geschlossenzellige Schaum die Gestalt der Form annimmt. Im nächsten Verfahrensschritt wird auf die Oberfläche des geschlossenzelligen Schaums eine Schicht aus faserverstärktem Material aufgebracht, wobei die Anbindung der jeweiligen Oberflächen unter Verwendung von einem Epoxidharz durchgeführt wird. GB-A 2 455 044 offenbart jedoch nicht, dass ein Fasermaterial in den Kern des mehrschichtigen Kompositartikels eingebracht werden kann.

Ein sinngemäßes Verfahren bzw. ein sinngemäßer mehrschichtiger Kompositartikel (wie in GB-A 2 455 044) ist auch in WO 2009/047483 offenbart. Diese mehrschichtigen Kompositartikel eignen sich beispielsweise zur Verwendung von Rotorblättern (in Windturbinen) oder als Bootrumpf.

US-B 7,201,625 offenbart ein Verfahren zur Herstellung von Schaumprodukten sowie die Schaumprodukte als solche, die beispielsweise im Sportbereich als Surfbrett eingesetzt werden können. Den Kern des Schaumproduktes bildet ein Partikelschaum, beispielsweise auf Basis eines Polystyrolschaums. Dieser Partikelschaum wird in einer speziellen Form hergestellt, wobei eine Plastikaußenhaut den Partikelschaum umschließt. Die Plastikaußenhaut kann beispielsweise ein Polyethylenfilm sein. Auch US-B 7,201,625 offenbart jedoch nicht, dass im Partikelschaum Fasern zur Verstärkung des Materials enthalten sein können.

US-B 6,767,623 offenbart Sandwichpaneele, die eine Kernschicht aus Polypropylenpartikelschaum auf der Basis von Partikeln mit einer Partikelgröße im Bereich von 2 bis 8 mm und einer Schüttdichte im Bereich von 10 bis 100 g/l aufweisen. Weiterhin umfassen die Sandwichpaneele zwei Deckschichten aus faserverstärktem Polypropylen, wobei die einzelnen Deckschichten so um den Kern angeordnet sind, dass ein Sandwich ausgebildet wird. Gegebenenfalls können noch weitere Schichten zu dekorativen Zwecken in den Sandwichpaneelen enthalten sein. Die Deckschichten können Glasfasern oder sonstige Polymerfasern enthalten.

EP-A 2 420 531 offenbart Extrusionsschaumstoffe auf Basis eines Polymers wie Polystyrol, in denen mindestens ein mineralischer Füllstoff mit einer Partikelgröße von ≤ 10 $\mu$m und mindestens ein Keimbildner enthalten sind. Diese Extrusionsschaumstoffe zeichnen sich durch ihre verbesserte Steifigkeit aus. Weiterhin wird ein entsprechendes Extrusionsverfahren zur Herstellung solcher Extrusionsschaumstoffe auf Basis von Polystyrol beschrieben. Die Extrusionsschaumstoffe können geschlossenzellig sein. Die EP-A 2 480 531 beschreibt allerdings nicht, dass die Extrusionsschaumstoffe Fasern enthalten.

WO 2005/056653 betrifft Partikelschaumstoffformteile aus expandierbaren, Füllstoff enthaltenden Polymergranulaten. Die Partikelschaumstoffformteile sind erhältlich durch Verschweißen von vorgeschäumten Schaumpartikeln aus expandierbaren, Füllstoff enthaltenden, thermoplastischen Polymergranulaten, wobei der Partikelschaumstoff eine Dichte im Bereich von 8 bis 300 g/l aufweist. Bei den thermoplastischen Polymergranulaten handelt es sich insbesondere um ein Styrolpolymer. Als Füllstoff können pulverförmige anorganische Stoffe, Metall, Kreide, Aluminiumhydroxid, Kalziumcarbonat oder Tonerde oder kugel- oder faserförmige anorganische Stoffe wie Glaskugeln, Glasfasern oder Kohlefasern eingesetzt werden.

Die US 3,030,256 beschreibt laminierte Paneele sowie ein Verfahren zu deren Herstellung. Die Paneele umfassen ein Kernmaterial, in das Faserbündel eingebracht werden sowie Oberflächenmaterialien. Die Kernmaterialien sind geschäumte Plastik und expandierter Plastik. Die Fasern befinden sich mit einem Faserbereich innerhalb des Schaumstoffes. Ein erster Faserbereich ragt aus der ersten Seite des Formkörpers heraus, ein zweiter Faserbereich aus der zweiten Seite des Formkörpers.

Die US 6,187,411 betrifft verstärkte Sandwich-Paneele, die ein Schaumstoffkernmaterial, das auf beiden Seiten eine Faserschicht aufweist und Fasern, die durch die äußeren Faserschichten und den Schaumstoff hindurchgestochen werden, umfasst. Als Schaumstoffkernmaterialen sind Polyurethane, Phenole und Isocyanate beschrieben. Ein Schaumstoff, der hergestellt ist durch Polymerisation einer reaktiven Mischung, ist nicht offenbart.

Die US 2010/0196652 betrifft quasi-isotrope Sandwichstrukturen, die ein Kernmaterial umfassen, das von Fasermatten umgeben ist, wobei Glasfaser-Rovings in die Fasermatten und das Kernmaterial gestochen sind. Als Schaumstoffe sind verschiedene Schaumstoffe wie beispielsweise Polyurethan, Polyisocuanurat, Phenole, Polystyrol, PEI, Polyethylen, Polypropylen und ähnliche beschrieben.

Nachteilig bei den in US 3,030,256, US 6,187,411 und US 2010/0196652 beschriebenen Kompositmaterialien ist, dass diese häufig eine unzureichende Widerstandsfähigkeit gegen Bruch aufweisen, sowie einen relativ hohen Abrieb.

Die der vorliegenden Erfindung zugrunde liegende Aufgabe besteht in der Bereitstellung von neuen faserverstärkten Formkörpern bzw. Paneelen.

Gelöst wird diese Aufgabe erfindungsgemäß durch einen Formkörper aus Schaumstoff, wobei mindestens eine Faser (F) sich mit einem Faserbereich (FB2) innerhalb des Formkörpers befindet und von dem Schaumstoff umschlossen ist, während ein Faserbereich (FB1) der Faser (F) aus einer ersten Seite des Formkörpers herausragt und eine Faserbereich (FB3) der Faser (F) aus einer zweiten Seite des Formkörpers herausragt, wobei der Schaumstoff hergestellt ist durch Polymerisation einer reaktiven Mischung (rM), die die folgenden Komponenten (A) bis (C) enthält:

(A) mindestens eine Verbindung mit gegenüber Isocyanaten reaktiven Gruppen, wobei mindestens eine Verbindung mit gegenüber Isocyanaten reaktiven Gruppen ein gewichtsmittleres Molekulargewicht von mindestens 1700 g/mol aufweist,

(B) mindestens ein Treibmittel und

(C) mindestens ein Polyisocyanat, das 14 bis 100 Gew.-%, bezogen auf das Gesamtgewicht des mindestens einen Polyisocyanats, mindestens eines Polyisocyanat-Prepolymers enthält,
wobei die reaktive Mischung (rM) kein weiteres Polyisocyanat außer der Komponente (C) enthält, wobei die Komponente (A) hergestellt ist, ausgehend von einer Verbindung ausgewählt aus der Gruppe bestehend aus Alkoholen, Sacchariden, Zuckeralkoholen und Aminen, und die Komponente (B) der reaktiven Mischung (rM) ausgewählt ist aus der Gruppe bestehend aus n-Pentan, iso-Pentan, Cyclopentan, 1,1,1,3,3-Pentafluorobutan, 1,1,1,3,3-Pentafluoropropan, 1,1,1,2,3,3,3-Heptafluoropropan, Wasser und Hydrofluoroolefinen und die Komponente (C) einen Isocyanat-Index im Bereich von 90 bis 180 aufweist.

Anders ausgedrückt ist der Schaumstoff erhältlich durch Polymerisation der reaktiven Mischung (rM).
Vorteilhaft ist bei den erfindungsgemäßen Formkörpern, dass durch den Einsatz von Schaumstoffen, die durch Polymerisation der reaktiven Mischung (rM) hergestellt sind, der Abrieb der Schaumstoffe gegenüber rauen Oberflächen und gegenüber sich selbst, deutlich reduziert wird. Dies führt zu einer geringeren Emission bei der mechanischen Bearbeitung der Schaumstoffe und der daraus hergestellten Formkörper. Zudem lässt sich durch die geringe Emission und damit den geringen Abrieb die Maßhaltigkeit von konfektionierten Schaumstoffen und damit der erfindungsgemäßen Formkörper besser gewährleisten.
Zudem weisen die erfindungsgemäßen Schaumstoffe ein besseres Widerstandsverhalten gegenüber Bruch, insbesondere bei schwingender Belastung, auf, was die Transportfähigkeit der Schaumstoffe und damit auch der erfindungsgemäßen Formkörper, signifikant verbessert. Die erfindungsgemäßen Formkörper aus Schaumstoff weisen zudem einen verbesserten Auszugswiderstand der eingebrachten Faser (F) auf.
Zudem zeichnen sich die erfindungsgemäßen Schaumstoffe und damit auch die erfindungsgemäßen Formkörper durch eine hohe Geschlossenzelligkeit aus.
Die erfindungsgemäßen Formkörper zeichnen sich außerdem in vorteilhafter Weise durch eine geringe Harzaufnahme bei gleichzeitig guter Grenzflächenanbindung aus, wobei die geringe Harzaufnahme insbesondere auf den Schaumstoff, hergestellt durch Polymerisation der reaktiven Mischung (rM), zurückzuführen ist. Dieser Effekt ist insbesondere dann von Bedeutung, wenn die erfindungsgemäßen Formkörper zu den erfindungsgemäßen Paneelen weiterverarbeitet werden.
Eine weitere Verbesserung der Anbindung bei gleichzeitig reduzierter Harzaufnahme wird erfindungsgemäß durch die Faserverstärkung der Schaumstoffe in den erfindungsgemäßen Formkörpern bzw. den daraus resultierenden Paneelen ermöglicht. Erfindungsgemäß können die Fasern (einzeln oder vorzugsweise als Faserbündel) in vorteilhafter Weise zunächst trocken und/oder durch mechanische Prozesse in den Schaumstoff eingebracht werden. Die Fasern bzw. Faserbündel werden an den jeweiligen Schaumstoffoberflächen nicht bündig, sondern mit Überstand abgelegt und ermöglichen damit eine verbesserte Anbindung bzw. eine direkte Verbindung mit den entsprechenden Decklagen im erfindungsgemäßen Paneel. Dies ist insbesondere dann der Fall, wenn als Decklage erfindungsgemäß mindestens eine weitere Schicht (S1) unter Ausbildung eines Paneels auf die erfindungsgemäßen Formkörper aufgebracht wird. Vorzugsweise werden zwei Schichten (S1), die gleich oder verschieden sein können, aufgebracht. Besonders bevorzugt werden zwei gleiche Schichten (S1), insbesondere zwei gleiche faserverstärkte Harzschichten, auf einander gegenüberliegenden Seiten des erfindungsgemäßen Formkörpers unter Ausbildung eines erfindungsgemäßen Paneels aufgebracht. Solche Paneele werden auch als "Sandwichmaterialien" bezeichnet, wobei der erfindungsgemäße Formkörper auch als "Kernmaterial" bezeichnet werden kann.
Die erfindungsgemäßen Paneele zeichnen sich somit durch eine geringe Harzaufnahme in Verbindung mit einer guten Schälfestigkeit sowie einer guten Schubsteifigkeit und einem hohen Schubmodul aus. Weiterhin sind hohe Festigkeits- und Steifigkeitseigenschaften gezielt durch die Wahl der Fasertypen, deren Anteil und Anordnung einstellbar. Der Effekt einer geringen Harzaufnahme ist deswegen von Bedeutung, weil beim Einsatz von solchen Paneelen (Sandwichmaterialien) häufig das Ziel besteht, dass die strukturellen Eigenschaften bei möglichst geringem Gewicht erhöht werden sollen. Beim Einsatz von beispielsweise faserverstärkten Decklagen trägt neben den eigentlichen Decklagen und dem Formkörper (Sandwichkern) die Harzaufnahme des Formkörpers (Kernmaterials) zum Gesamtgewicht bei. Durch die erfindungsgemäßen Formkörper bzw. die erfindungsgemäßen Paneele kann die Harzaufnahme jedoch verringert werden, wodurch Gewicht sowie Kosten eingespart werden können.
Weiterhin können bei oder nach der Fertigung weitere Schichten (S2) auf den Schaumstoff aufgebracht werden. Derartige Schichten verbessern den Gesamtzusammenhalt des Schaumstoffs bzw. des erfindungsgemäßen Formkörpers.

Weitere Verbesserungen/Vorteile können dadurch erzielt werden, dass die Fasern (F) in einem Winkel $\alpha$ im Bereich von 0° bis 60° in Bezug zur Dickenrichtung (d) des Schaumstoffs in den Schaumstoff eingebracht werden, besonders bevorzugt von 0° bis 45°. Generell ist das Einbringen der Fasern (F) in einem Winkel $\alpha$ von 0°bis < 90° technisch automatisiert durchführbar.

Zusätzliche Verbesserungen/Vorteile können erzielt werden, wenn die Fasern (F) nicht nur parallel zueinander in den Schaumstoff eingebracht werden, sondern weitere Fasern (F) in einem Winkel $\beta$ zueinander, der vorzugsweise im Bereich von > 0 bis 180° liegt. Dadurch wird zusätzlich eine gezielte Verbesserung der mechanischen Eigenschaften des erfindungsgemäßen Formkörpers in unterschiedlichen Richtungen erreicht.

Ebenso ist es von Vorteil, wenn in den erfindungsgemäßen Paneelen die Harz(deck)schicht durch Flüssiginjektionsverfahren oder Flüssiginfusionsverfahren aufgebracht wird, bei dem die Fasern während der Verarbeitung mit Harz getränkt und die mechanischen Eigenschaften verbessert werden können. Zudem können dadurch Kosten eingespart werden.

Nachfolgend wird die vorliegende Erfindung weiter präzisiert.

Erfindungsgemäß umfasst der Formkörper einen Schaumstoff und mindestens eine Faser (F).

Der Schaumstoff wird hergestellt durch Polymerisation einer reaktiven Mischung (rM), die die folgenden Komponenten (A) bis (C) enthält:

(A) mindestens eine Verbindung mit gegenüber Isocyanaten reaktiven Gruppen, wobei mindestens eine Verbindung mit gegenüber Isocyanaten reaktiven Gruppen ein gewichtsmittleres Molekulargewicht von mindestens 1700 g/mol aufweist,

(B) mindestens ein Treibmittel und

(C) mindestens ein Polyisocyanat, das 14 bis 100 Gew.-%, bezogen auf das Gesamtgewicht des mindestens einen Polyisocyanats, mindestens eines Polyisocyanat-Prepolymers enthält,
wobei die reaktive Mischung (rM) kein weiteres Polyisocyanat außer der Komponente (C) enthält, wobei die Komponente (A) hergestellt ist, ausgehend von einer Verbindung ausgewählt aus der Gruppe bestehend aus Alkoholen, Sacchariden, Zuckeralkoholen und Aminen, und die Komponente (B) der reaktiven Mischung (rM) ausgewählt ist aus der Gruppe bestehend aus n-Pentan, iso-Pentan, Cyclopentan, 1,1,1,3,3-Pentafluorobutan, 1,1,1,3,3-Pentafluoropropan, 1,1,1,2,3,3,3-Heptafluoropropan, Wasser und Hydrofluoroolefinen und die Komponente (C) einen Isocyanat-Index im Bereich von 90 bis 180 aufweist.

Im Rahmen der vorliegenden Erfindung werden die Begriffe "Komponente (A)" und "mindestens eine Verbindung mit gegenüber Isocyanaten reaktiven Gruppen" synonym gebraucht und besitzen daher die gleiche Bedeutung.

Entsprechendes gilt für "Komponente (B)" und "mindestens ein Treibmittel". Diese Begriffe werden im Rahmen der vorliegenden Erfindung ebenfalls synonym gebraucht und besitzen daher die gleiche Bedeutung.

Die Begriffe "Komponente (C)" und "mindestens ein Polyisocyanat" werden im Rahmen der vorliegenden Erfindung ebenfalls synonym gebraucht und besitzen daher die gleiche Bedeutung

Die reaktive Mischung (rM) enthält beispielsweise im Bereich von 25 bis 60 Gew.-% der Komponente (A), bevorzugt im Bereich von 30 bis 50 Gew.-% und insbesondere bevorzugt im Bereich von 30 bis 40 Gew.-%, jeweils bezogen auf die Summe der Gewichtsprozente der Komponenten (A) bis (C), bevorzugt bezogen auf das Gesamtgewicht der reaktiven Mischung (rM).

Die reaktive Mischung (rM) enthält beispielsweise im Bereich von 0,5 bis 15 Gew.-% der Komponente (B), bevorzugt im Bereich von 1 bis 12 Gew.-% und insbesondere bevorzugt im Bereich von 1 bis 10 Gew.-%, jeweils bezogen auf die Summe der Gewichtsprozente der Komponenten (A) bis (C), bevorzugt bezogen auf das Gesamtgewicht der reaktiven Mischung (rM).

Die reaktive Mischung (rM) enthält beispielsweise im Bereich von 40 bis 74,5 Gew.-% der Komponente (C), bevorzugt im Bereich von 50 bis 69 Gew.-% und insbesondere bevorzugt im Bereich von 60 bis 69 Gew.-%, jeweils bezogen auf die Summe der Gewichtsprozente der Komponenten (A) bis (C), bevorzugt bezogen auf das Gesamtgewicht der reaktiven Mischung (rM).

"Mindestens eine Verbindung mit gegenüber Isocyanaten reaktiven Gruppen" bedeutet im Rahmen der vorliegenden Erfindung sowohl genau eine Verbindung mit gegenüber Isocyanaten reaktiven Gruppen als auch eine Mischung aus zwei oder mehreren Verbindungen mit gegenüber Isocyanaten reaktiven Gruppen. Bevorzugt sind Mischungen aus zwei oder drei Verbindungen mit gegenüber Isocyanaten reaktiven Gruppen, insbesondere bevorzugt sind Mischungen aus drei Verbindungen mit gegenüber Isocyanaten reaktiven Gruppen.

"Mit gegenüber Isocyanaten reaktive Gruppen" bedeutet, dass die Komponente (A) mindestens eine, bevorzugt zwei oder mehrere gegenüber Isocyanaten reaktive Gruppen aufweist.

Als Komponente (A) eigenen sich alle dem Fachmann bekannten Verbindungen mit gegenüber Isocyanaten reaktiven Gruppen, die hergestellt sind ausgehend von einer Verbindung ausgewählt aus der Gruppe bestehend aus Alkoholen, Sacchariden, Zuckeralkoholen und Aminen, wobei mindestens eine dieser Verbindungen ein gewichtsmittleres Molekulargewicht von mindestens 1700 g/mol aufweist.

Gegenüber Isocyanaten reaktive Gruppen sind funktionelle Gruppen, die mit Isocyanaten eine Additionsreaktion eingehen können und dem Fachmann als solche bekannt und beispielsweise OH-Gruppen, SH-Gruppen, NH-Gruppen und/oder $NH_2$-Gruppen.

Die Komponente (A) ist daher beispielsweise ausgewählt aus der Gruppe bestehend aus Polyolen und Polyaminen. Geeignete Polyole sind dem Fachmann bekannt und vorzugsweise Polyesterpolyole und/oder Polyetherpolyole.

Vorzugsweise ist die Komponente (A) daher ausgewählt aus der Gruppe bestehend aus Polyesterpolyolen, Polyetherpolyolen und Polyaminen. Als Komponente (A) sind Polyesterpolyole und Polyetherpolyole besonders bevorzugt. Am meisten bevorzugt sind Polyetherpolyole.

Mindestens eine der Verbindungen mit gegenüber Isocyanaten reaktiven Gruppen weist erfindungsgemäß ein gewichtsmittleres Molekulargewicht von mindestens 1700 g/mol, bevorzugt von mindestens 2500 g/mol, besonders bevorzugt von mindestens 4000 g/mol auf, beispielsweise von 4350 g/mol. Das gewichtsmittlere Molekulargewicht der Komponente (A) liegt üblicherweise bei höchstens 8000 g/mol, bevorzugt bei höchstens 7000 g/mol und besonders bevorzugt bei höchstens 6000 g/mol. Das gewichtsmittlere Molekulargewicht wird bestimmt nach DIN 55672-1:2008.

Die Funktionalität der Komponente (A) liegt im Allgemeinen im Bereich von 1,5 bis 8, bevorzugt im Bereich von 1,7 bis 7 und besonders bevorzugt im Bereich von 1,9 bis 6. Unter der Funktionalität der Komponente (A) wird im Rahmen der vorliegenden Erfindung die durchschnittliche Anzahl der gegenüber Isocyanaten reaktiven Gruppen pro Molekül verstanden. Ihre Bestimmung ist dem Fachmann bekannt.

Ist die Komponente (A) ausgewählt aus der Gruppe bestehend aus Polyesterpolyolen und Polyetherpolyolen, so weist die Komponente (A) vorzugsweise eine Hydroxylzahl (OH-Zahl) auf, die größer als 10 mg KOH/g, bevorzugt größer als 15 mg KOH/g, besonders bevorzugt größer als 20 mg KOH/g ist. Die Obergrenze für die Hydroxylzahl der Komponente (A) liegt üblicherweise bei 1000 mg KOH/g, bevorzugt bei 900 mg KOH/g und besonders bevorzugt bei 700 mg KOH/g.

Die Hydroxylzahl (OH-Zahl) wird im Rahmen der vorliegenden Erfindung bestimmt nach DIN 53240-2:2007.

Für den Fall, dass als Komponente (A) eine Mischung aus zwei oder mehreren Verbindungen mit gegenüber Isocyanaten reaktiven Gruppen eingesetzt wird, so bezieht sich die Hydroxylzahl auf diese Mischung. Es ist also möglich, dass wenn eine Mischung aus zwei oder mehreren Verbindungen mit gegenüber Isocyanaten reaktiven Gruppen als Komponente (A) eingesetzt wird, beispielsweise eine der Verbindungen eine höhere Hydroxylzahl als die vorstehend beschriebene aufweist und eine andere der Verbindungen eine niedrigere Hydroxylzahl als die vorstehend beschriebene aufweist. Gemittelt über alle Hydroxylzahlen, weist dann die Mischung aus zwei oder mehreren Verbindungen mit gegenüber Isocyanaten reaktiven Gruppen die vorstehend beschriebene Hydroxylzahl auf. Insbesondere weist eine solche Mischung aus zwei oder mehreren Verbindungen mit gegenüber Isocyanaten reaktiven Gruppen als Komponente (A) eine Hydroxylzahl im Bereich von 10 bis 80 mg KOH/g, bevorzugt im Bereich von 15 bis 60 mg KOH/g auf.

Als Komponente (A) am meisten bevorzugt sind Polyetherpolyole.

Üblicherweise werden Polyetherpolyole hergestellt durch Polymerisation eines oder mehrerer Alkylenoxide, vorzugsweise mit 2 bis 4 Kohlenstoffatomen. Erfindungsgemäß ist die Polymerisation eine anionische Polymerisation, wobei als Katalysator Alkalimetallhydroxide, wie Natriumhydroxid oder Kaliumhydroxid, oder Alkalimetallalkoholate, wie Natriummethylat, Natriumethylat, Kaliummethylat oder Kaliumisopropylat eingesetzt werden unter Zusatz von mindestens einem Startermolekül, das 2 bis 8, bevorzugt 3 bis 8 gegenüber dem Katalysator reaktive Wasserstoffatome enthält.

Geeignete Alkylenoxide mit 2 bis 4 Kohlenstoffatomen durch deren Polymerisation die als Komponente (A) am meisten bevorzugten Polyetherpolyole üblicherweise hergestellt werden, sind beispielsweise Tetrahydrofuran, 1,3-Propylenoxid, 1,2-Butylenoxid, 2,3-Butylenoxid, Styroloxid, Ethylenoxid und/oder 1,2-Propylenoxid. Ethylenoxid und/oder 1,2-Propylenoxid sind bevorzugt. Es ist erfindungsgemäß möglich, eines dieser vorgenannten Alkylenoxide einzusetzen, ebenso ist es möglich, zwei oder mehrere dieser Alkylenoxide alternierend nacheinander oder als Mischung einzusetzen.

Erfindungsgemäß ist das Startermolekül ausgewählt aus der Gruppe bestehend aus Alkoholen, Sacchariden, Zuckeralkoholen und Aminen.

Entsprechend ist die Komponente (A) erfindungsgemäß hergestellt, ausgehend von einer Verbindung ausgewählt aus der Gruppe bestehend aus Alkoholen, Sacchariden, Zuckeralkoholen und Aminen.

Als Startermolekül geeignete Alkohole sind beispielsweise ausgewählt aus der Gruppe bestehend aus Glyzerin, Trimethylolpropan (TMP), Pentaerythrit und Diethylenglycol.

Geeignete Saccharide sind beispielsweise Saccharose, geeignete Zuckeralkohole sind beispielsweise Sorbit.

Geeignete Amine sind beispielsweise Methylamin, Ethylamin, Isopropylamin, Butylamin, Benzylamin, Anilin, Toluidin, Toluylendiamin (TDA), Naphtylenamin, Ethylendiamin (EDA), Diethylentriamin, 4,4'-Methylendianilin, 1,3-Propandiamin, 1,6-Hexandiamin, Ethanolamin, Diethanolamin und/oder Triethanolamin.

Zudem können als Startermoleküle Kondensationsprodukte aus zumindest einem Amin, zumindest einer aromatischen Verbindung und Formaldehyd eingesetzt werden. Insbesondere Kondensationsprodukte aus Formaldehyd, Phenol und Diethanolamin oder Ethanolamin, von Formaldehyd, Alkylphenolen und Diethanolamin oder Ethanolamin, von Formaldehyd, Bisphenol A und Diethanolamin oder Ethanolamin, von Formaldehyd, Anilin und Diethanolamin oder Ethanolamin, von Formaldehyd, Kresol und Diethanolamin oder Ethanolamin, von Formaldehyd, Toluidin und Diethanolamin oder Ethanolamin, von Formaldehyd, Toluolendiamin (TDA) und Diethanolamin oder Ethanolamin können eingesetzt werden.

Als Startermoleküle besonders bevorzugte Verbindungen sind ausgewählt aus der Gruppe bestehend aus Glyzerin, Toluylendiamin (TDA), Saccharose, Pentaerythrit, Diethylenglycol, Trimetylolpropan (TMP), Ethylendiamin, Sorbit und Mischungen daraus.

Die Komponente (A) ist also vorzugsweise hergestellt ausgehend von einem Alkylenoxid, vorzugsweise mit 2 bis 4 Kohlenstoffatomen, und zumindest einem Startermolekül ausgewählt aus der Gruppe bestehend aus Glyzerin, Toluylendiamin (TDA), Saccharose, Pentaerythrit, Diethylenglycol, Trimetylolpropan (TMP), Ethylendiamin, Sorbit und Mischungen davon.

Erfindungsgemäß bevorzugt wird als Komponente (A) eine Mischung aus zwei oder mehreren Verbindungen mit gegenüber Isocyanaten reaktiven Gruppen eingesetzt, Besonders bevorzugt eine Mischung aus zwei oder drei Verbindungen mit gegenüber Isocyanaten reaktiven Gruppen und ganz besonders bevorzugt eine Mischung aus genau drei Verbindungen mit gegenüber Isocyanaten reaktiven Gruppen.

Daher ist die Komponente (A) vorzugsweise eine Mischung aus den folgenden Komponenten (A1) und (A2):

(A1)     mindestens ein Polyetherpolyol, basierend auf mindestens einem dreiwertigen Alkohol, vorzugsweise basierend auf Glyzerin, und

(A2)     mindestens ein Polyetherpolyol, basierend auf mindestens einem Amin, vorzugsweise basierend auf Toluylendiamin (TDA).

In einer weiteren bevorzugten Ausführungsform wird als Komponente (A) eine Mischung aus den folgenden Komponenten (A1) bis (A3) eingesetzt.

(A1)     mindestens ein Polyetherpolyol, basierend auf mindestens einem dreiwertigen Alkohol, vorzugsweise basierend auf Glyzerin,

(A2)     mindestens ein Polyetherpolyol, basierend auf mindestens einem Amin, vorzugsweise basierend auf Toluylendiamin (TDA), und

(A3)     mindestens ein Polyetherpolyol, basierend auf Sacchariden und/oder Alkoholen, vorzugsweise basierend auf einer Mischung aus Saccharose, Pentaerythrit und Diethylenglycol.

Basiert das mindestens eine Polyetherpolyol der Komponente (A1) auf mindestens einem dreiwertigen Alkohol, vorzugsweise auf Glyzerin, so bedeutet dies, dass das bei der Herstellung der Komponente (A1) üblicherweise eingesetzte Startermolekül mindestens ein dreiwertiger Alkohol, vorzugsweise Glyzerin, ist.

Die Komponente (A1) wird dann beispielsweise hergestellt ausgehend von dem Startermolekül, mindestens einem dreiwertigen Alkohol, vorzugsweise ausgehend von Glyzerin, und mindestens einem Alkylenoxid, vorzugsweise Propylenoxid und/oder Ethylenoxid, mehr bevorzugt einer Mischung aus Propylenoxid und Ethylenoxid.

Bei der Herstellung der Komponente (A1) ausgehend von dem Startermolekül und mindestens einem Alkylenoxid, wird das Startermolekül üblicherweise alkoxyliert. Dieses Verfahren ist dem Fachmann bekannt.

Die Komponente (A1) weist vorzugsweise ein gewichtsmittleres Molekulargewicht von mindestens 1700 g/mol auf. Beispielsweise liegt das gewichtmittlere Molekulargewicht der Komponente (A1) im Bereich von 1700 g/mol bis 8000 g/mol, bevorzugt im Bereich von 2500 g/mol bis 7000 g/mol, insbesondere bevorzugt im Bereich von 3000 g/mol bis 6000 g/mol, beispielsweise bei 4350 g/mol, bestimmt nach DIN 55672-1:2008.

Die Hydroxylzahl (OH-Zahl) der Komponente (A1) liegt beispielsweise im Bereich von 10 bis 80 mg KOH/g, bevorzugt im Bereich von 15 bis 60 mg KOH/g, besonders bevorzugt im Bereich von 25 bis 45 mg KOH/g. Für die Bestimmung der Hydroxylzahl gelten die zuvor beschriebenen Ausführungen und Bevorzugungen.

Die Funktionalität der Komponente (A1) liegt beispielsweise im Bereich von 1,5 bis 6, bevorzugt im Bereich von 1,7 bis 5 und besonders bevorzugt im Bereich von 1,9 bis 4,5.

Basiert das mindestens eine Polyetherpolyol der Komponente (A2) auf mindestens einem Amin, vorzugsweise auf Toluylendiamin (TDA), so bedeutet dies, dass das bei der Herstellung der Komponente (A2) üblicherweise eingesetzte Startermolekül mindestens ein Amin, vorzugsweise Toluylendiamin (TDA), ist.

Die Komponente (A2) wird dann beispielsweise hergestellt ausgehend von dem Startermolekül, mindestens einem Amin, vorzugsweise ausgehend von Toluylendiamin (TDA), und mindestens einem Alkylenoxid, vorzugsweise Propylenoxid und/oder Ethylenoxid, mehr bevorzugt einer Mischung aus Propylenoxid und Ethylenoxid.

Bei der Herstellung der Komponente (A2) ausgehend von dem Startermolekül und mindestens einem Alkylenoxid, wird das Startermolekül üblicherweise alkoxyliert. Dieses Verfahren ist dem Fachmann bekannt.

Das gewichtsmittlere Molekulargewicht der Komponente (A2) liegt beispielsweise im Bereich von 200 g/mol bis 2000 g/mol, bevorzugt im Bereich von 250 g/mol bis 1500 g/mol und bevorzugt im Bereich von 300 g/mol bis 1000 g/mol, beispielsweise bei 530 g/mol, bestimmt nach DIN 55672-1:2008.

Die Komponente (A2) weist beispielsweise eine Hydroxylzahl (OH-Zahl) im Bereich von 100 bis 600 mg KOH/g, bevorzugt im Bereich von 120 bis 500 mg KOH/g, besonders bevorzugt im Bereich von 150 bis 450 mg KOH/g auf.

Die Funktionalität der Komponente (A2) liegt beispielsweise im Bereich von 2 bis 5, bevorzugt im Bereich von 2,5 bis 4,5 und besonders bevorzugt im Bereich von 3 bis 4,2.

Basiert das mindestens eine Polyetherpolyol der Komponente (A3) auf Sacchariden und/oder Alkoholen, vorzugsweise auf einer Mischung aus Saccharose, Pentaerythrit und Diethylenglycol, so bedeutet dies, dass das bei der Herstellung der Komponente (A3) üblicherweise eingesetzte Startermolekül ein Saccharid und/oder ein Alkohol ist, vorzugsweise eine Mischung aus Saccharose, Pentaerythrit und Diethylenglycol.

Die Komponente (A3) wird dann beispielsweise hergestellt ausgehend von dem Startermolekül, einem Saccharid und/oder einem Alkohol, vorzugsweise ausgehend von einer Mischung aus Saccharose, Penaerythrit und Diethylenglycol, und mindestens einem Alkylenoxid, vorzugsweise Propylenoxid und/oder Ethylenoxid, mehr bevorzugt Propylenoxid.

Bei der Herstellung der Komponente (A3) ausgehend von dem Startermolekül und mindestens einem Alkylenoxid, wird das Startermolekül üblicherweise alkoxyliert. Dieses Verfahren ist dem Fachmann bekannt.

Die Komponente (A3) weist beispielsweise ein gewichtmittleres Molekulargewicht im Bereich von 200 g/mol bis 2000 g/mol, bevorzugt im Bereich von 300 g/mol bis 1500 g/mol, besonders bevorzugt im Bereich von 400 g/mol bis 1000 g/mol, beispielsweise von 545 g/mol auf, bestimmt mittels DIN 55672-1 :2008.

Die Hydroxylzahl (OH-Zahl) der Komponente (A3) liegt beispielsweise im Bereich von 100 bis 600 mg KOH/g, bevorzugt im Bereich von 200 bis 500 mg KOH/g und besonders bevorzugt im Bereich von 300 bis 450 mg KOH/g.

Die Funktionalität der Komponente (A3) liegt beispielsweise im Bereich von 2 bis 6, bevorzugt im Bereich von 2,5 bis 5,5 und besonders bevorzugt im Bereich von 3 bis 5,2.

Wird als Komponente (A) eine Mischung aus den Komponenten (A1) bis (A3) eingesetzt, so können die Komponenten (A1) bis (A3) in beliebigen Mengen eingesetzt werden.

Vorzugsweise werden dann im Bereich von 30 bis 60 Gew.-%, bevorzugt im Bereich von 35 bis 50 Gew.-%, besonders bevorzugt im Bereich von 38 bis 45 Gew.-% der Komponente (A1) eingesetzt, jeweils bezogen auf die Summe der Gewichtsprozente der Komponenten (A1), (A2) und (A3), bevorzugt bezogen auf das Gesamtgewicht der Komponente (A).

Es werden dann beispielsweise im Bereich von 10 bis 40 Gew.-% der Komponente (A2), bevorzugt im Bereich von 20 bis 40 Gew.-% der Komponente (A2) und besonders bevorzugt im Bereich von 25 bis 35 Gew.-% der Komponente (A2) eingesetzt, jeweils bezogen auf die Summe der Gewichtsprozente der Komponenten (A1), (A2) und (A3), bevorzugt bezogen auf das Gesamtgewicht der Komponente (A).

Bevorzugt werden dann außerdem im Bereich von 10 bis 40 Gew.-% der Komponente (A3) eingesetzt, besonders bevorzugt im Bereich von 20 bis 40 Gew.-% und insbesondere bevorzugt im Bereich von 22 bis 35 Gew.-%, jeweils bezogen auf die Summe der Gewichtsprozente der Komponenten (A1), (A2) und (A3), bevorzugt bezogen auf das Gesamtgewicht der Komponente (A).

Die Summe der Gewichtsprozente der Komponenten (A1), (A2) und (A3) addieren sich üblicherweise zu 100 %.

Als Komponente (B) enthält die reaktive Mischung (rM) mindestens ein Treibmittel, ausgewählt aus der Gruppe bestehend aus n-Pentan, iso-Pentan, Cyclopentan, 1,1,1,3,3-Pentafluorobutan, 1,1,1,3,3-Pentafluoropropan, 1,1,1,2,3,3,3-Heptafluoropropan, Wasser und Hydrofluoroolefinen, wie 1,1,1,4,4,4-Hexafluoro-2-buten und 1-Chloro-3,3,3-trifluoropropen.

Unter "mindestens ein Treibmittel" wird im Rahmen der vorliegenden Erfindung sowohl genau ein Treibmittel als auch eine Mischung aus zwei oder mehreren Treibmitteln verstanden.

Als Komponente (C) enthält die reaktive Mischung (rM) mindestens ein Polyisocyanat, das 14 bis 100 Gew.-%, bezogen auf das Gesamtgewicht des mindestens einen Polyisocyanats, mindestens eines Polyisocyanat-Prepolymers enthält, wobei die Komponente (C) einen Isocyanat-Index im Bereich von 90 bis 180 aufweist.

Die Summe der Gewichtsprozente des mindestens einen Polyisocyanats und des mindestens einen Polyisocyanat-Prepolymers ergibt üblicherweise 100 Gew.-%.

Es versteht sich von selbst, dass, wenn die Komponente (C) 100 Gew.-% des mindestens einen Polyisocyanat-Prepolymers enthält, dann das mindestens eine Polyisocyanat-Prepolymer der Komponente (C) entspricht. In diesem Fall werden also die Begriffe "Komponente (C)" und "mindestens ein Polyisocyanat-Prepolymer" synonym gebraucht und besitzen dann die gleiche Bedeutung.

Im Rahmen der vorliegenden Erfindung wird unter einem "Polyisocyanat" eine organische Verbindung verstanden, die mindestens eine Isocyanatgruppe, bevorzugt zwei oder mehrere Isocyanatgruppen aufweist. Organische Verbindungen mit genau zwei Isocyanatgruppen werden auch als Diisocyanate bezeichnet.

Als Komponente (C) eignen sich beispielsweise aliphatische, cycloaliphatische und/oder aromatische Polyisocyanate. Bevorzugt sind aromatische Polyisocyanate.

Geeignete aliphatische Polyisocyanate sind beispielsweise Hexamethylendiisocyanat-1,6, 2-Methyl-Pentamethylendiisocyanat-1,5, 2-Ethyl-Butylen-Diisocyanat-1,4, Pentamethylendiisocyanat-1,5 und Butylen-Diisocyanat-1,4 sowie Mischungen aus diesen.

Geeignete cycloaliphatische Polyisocyanate sind beispielsweise 1-Isocyanato-3,3,5-Trimethyl-5-Isocyanatomethyl-Cyclohexan (Isophorondiisocyanat), 1,4-Cyclohexandiisocyanat, 1-Methyl-2,4-Cyclohexandiisocyanat, 1-Methyl-2,6-Cyclohexandiisocyanat, 4,4'-Dicyclohexylmethandiisocyanat, 2,4'-Dicyclohexylmethandiisocyanat, 2,2'-Dicyclohexylmethandiisocyanat sowie die entsprechenden Isomerengemische.

Als aromatische Polyisocyanate eignen sich beispielsweise 1,5-Naphthylendiisocyanat (1,5-NDI), 2,4- und 2,6-Toluylendiisocyanat (TDI) sowie deren Gemische, 2,4'-, 2,2'- oder 4,4'-Diphenylmethandiisocyanat (mMDI) sowie Mischungen aus diesen, Polyphenyl-Polymethylen-Polyisocyanat (Polymer MDI, pMDI), Mischungen aus 2,4'-, 2,2'- und 4,4'-Diphenylmethandiisocyanat und Polyphenyl-Polymethylen-Polyisocyanaten (roh-MDI), Mischungen aus roh-MDI und Toloylendiisocyanaten, Polyphenylpolyisocyanate, Carbodiimid-modifizierte flüssige 4,4'- und/oder 2,4-Diphenylmethandiisocyanate und 4,4'-Diisocyanatodiphenylethan-(1,2).

Als Komponente (C) sind insbesondere Polyisocyanate bevorzugt, die bei einer Temperatur von 25 °C flüssig vorliegen.

Erfindungsgemäß enthält die Komponente (C) 14 bis 100 Gew.-% eines Polyisocyanat-Prepolymers. Vorzugsweise enthält die Komponente (C) 30 bis 100 Gew.-%, besonders bevorzugt 50 bis 100 Gew.-% des Polyisocyanat-Prepolymers, wobei die Gewichtsprozente jeweils auf das Gesamtgewicht der Komponente (C) bezogen sind.

In einer weiteren Ausführungsform enthält die Komponente (C) 11 bis 39,5 Gew.-%, bevorzugt 12 bis 35 Gew.-%, besonders bevorzugt 12,5 bis 33 Gew.-% des Polyisocyanat-Prepolymers, jeweils bezogen auf das Gesamtgewicht der Komponente (C).

Die Funktionalität der bevorzugt eingesetzten Polyisocyanat-Prepolymere liegt üblicherweise im Bereich von 1 bis 4, bevorzugt im Bereich von 2 bis 3.

Unter der Funktionalität der Komponente (C) wird die durchschnittliche Anzahl an Isocyanatgruppen pro Molekül verstanden. Ihre Bestimmung ist dem Fachmann bekannt.

Polyisocyanat-Prepolymere als solche sind dem Fachmann bekannt. Üblicherweise erfolgt die Herstellung von Polyisocyanat-Prepolymeren, indem die vorstehend beschriebenen Polyisocyanate mit Verbindungen mit gegenüber Isocyanaten reaktiven Gruppen, bevorzugt mit Polyolen, bei Temperaturen von etwa 80 °C zu Polyisocyanat-Prepolymeren umgesetzt werden. Bevorzugt werden die Verbindungen mit gegenüber Isocyanaten reaktiven Gruppen und die Polyisocyanate in einem solchen Verhältnis eingesetzt, dass der Isocyanat-Gehalt (NCO-Gehalt) des Polyisocyanat-Prepolymers im Bereich von 8 bis 35 %, vorzugsweise im Bereich von 15 bis 30 % und insbesondere bevorzugt im Bereich von 20 bis 30 % liegt.

Als Verbindungen mit gegenüber Isocyanaten reaktiven Gruppen eignen sich die vorstehend für die Komponenten (A) beschriebenen Polyesterpolyole und Polyetherpolyole. Polyetherpolyole sind bevorzugt, insbesondere bevorzugt sind Polyetherpolyole, die eine Hydroxylzahl (OH-Zahl) von wenigstens 100 mg KOH/g aufweisen. Die Hydroxylzahl der zur Herstellung des Polyisocyanat-Prepolymeren bevorzugt eingesetzten Polyetherpolyole liegt vorzugsweise im Bereich von 100 bis 600 mg KOH/g, besonders bevorzugt im Bereich von 150 bis 500 mg KOH/g und insbesondere bevorzugt im Bereich von 200 bis 450 mg KOH/g.

Die Funktionalität der zur Herstellung des Polyisocyanat-Prepolymeren bevorzugt eingesetzten Polyetherpolyole liegt beispielsweise im Bereich von 1,5 bis 6, bevorzugt im Bereich von 1,7 bis 5 und insbesondere bevorzugt im Bereich von 1,9 bis 4,5.

Die zur Herstellung des Polyisocyanat-Prepolymeren bevorzugt eingesetzten Polyetherpolyole können nach allen dem Fachmann bekannten Methoden hergestellt werden. Vorzugsweise werden sie wie vorstehend für die Komponente (A) beschrieben hergestellt, wobei als Startermolekül insbesondere bevorzugt Glycerin eingesetzt wird, das dann mit Ethylenoxid und/oder Propylenoxid umgesetzt wird. Besonders bevorzugt wird das Polyetherpolyol hergestellt ausgehend von Dipropylenglycol und/oder von Polypropylenglycol.

Besonders bevorzugt ist die Komponente (C) ein Polyisocyanat-Prepolymer hergestellt aus 4,4'-Diphenylmethandiisocyanat, Dipropylenglycol und Propylenglycol.

In einer weiteren bevorzugten Ausführungsform ist die Komponente (C) ein Polyisocyanat-Prepolymer aus 4,4'-Diphenylmethandiisocyanat, Polyphenyl-Polymethylen-Polyisocyanat und Polypropylenglycol.

In einer weiteren bevorzugten Ausführungsform wird als Komponente (C) zumindest eines der beiden vorstehend beschriebenen Polyisocyanat-Prepolymere eingesetzt mit weiteren Polyisocyanaten. Als diese weiteren Polyisocyanate ist eine Mischung von 4,4'-Diphenylmethandiisocyanat mit höherfunktionellen Oligomeren und Isomeren bevorzugt.

In einer weiteren bevorzugten Ausführungsform ist die Komponente (C) ein Polyisocyanat-Prepolymer aus pMDI, eine Mischung von 4,4'-Diphenylmethandiisocyanat mit höherfunktionellen Oligomeren und Isomeren mit einem Isocyanatgehalt von 31,5 %, und einem Polyetherpolyol aus Trimethylolpropan (TMP) und Ethylenoxid (EO), wobei das Isocanatprepolymer einen Isocyanat-Gehalt von 26,8 % aufweist und der TMP-EO Polyether eine OH-Zahl von 250 mg KOH/g besitzt.

Erfindungsgemäß weist die Komponente (C) einen Isocyanat-Index im Bereich von 90 bis 180, bevorzugt im Bereich von 80 bis 150 auf.

Unter dem Isocyanat-Index wird im Rahmen der vorliegenden Erfindung das stöchiometrische Verhältnis an Isocyanatgruppen zu mit Isocyanat reaktiven Gruppen multipliziert mit 100 verstanden. Unter "mit Isocyanat reaktiven Gruppen" werden dabei alle in der reaktiven Mischung (rM) enthaltenen gegenüber Isocyanat reaktiven Gruppen einschließlich gegebenenfalls chemischer Treibmittel und Verbindungen mit Epoxidgruppen verstanden, nicht aber die Isocyanatgruppe selbst.

Erfindungsgemäß enthält die reaktive Mischung (rM) kein weiters Polyisocyanat außer der Komponente (C).

Die reaktive Mischung (rM), durch deren Polymerisation der Schaumstoff hergestellt ist, kann zusätzlich weitere Komponenten enthalten. Üblicherweise enthält die reaktive Mischung (rM) zusätzlich eine Komponente (D), mindestens einen Katalysator.

"Mindestens ein Katalysator" bedeutet im Rahmen der vorliegenden Erfindung sowohl genau ein Katalysator als auch eine Mischung aus zwei oder mehreren Katalysatoren.

Die Begriffe "Komponente (D)" und "mindestens ein Katalysator" werden im Rahmen der vorliegenden Erfindung synonym gebraucht und besitzen daher die gleiche Bedeutung.

Als Komponente (D) können alle dem Fachmann bekannten Verbindungen eingesetzt werden, die die Reaktion zwischen der Komponente (A) und der Komponente (C) beschleunigen. Derartige Verbindungen sind dem Fachmann bekannt.

Geeignet sind basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin, 1,6,-Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo-(2,2,2)octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, und Triethylendiamin.

Geeignet sind außerdem Metallsalze, wie Eisen(II)-chlorid, Zinkchlorid, Bleioctoat und Zinnsalze, wie Zinndioctoat, Zinndiethylhexoat und Dibutylzinndilaurat.

Zinnsalze sind unter den Metallsalzen bevorzugt. Besonders bevorzugt sind als Katalysator Mischungen aus tertiären Aminen und organischen Zinnsalzen.

Als Katalysatoren kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen.

Vorzugsweise verwendet werden 0,001 bis 10 Gew.-teile Katalysator bzw. Katalysatorkombination, bezogen (d. h. gerechnet) auf 100 Gewichtsteile der Komponente (B). Es besteht auch die Möglichkeit, die Reaktion ohne Katalyse ablaufen zu lassen. In diesem Fall wird die katalytische Aktivität von mit Aminen gestarteten Polyolen ausgenutzt.

Wird in der reaktiven Mischung (rM) ein größerer Polyisocyanatüberschuss verwendet, kommen als Katalysatoren ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen. Durch diese Katalysatoren wird insbesondere die Trimerisierungsreaktion von NCO-Gruppen katalysiert.

Die reaktive Mischung (rM) kann zusätzlich eine Komponente (E), Additive, enthalten. Derartige Additive sind dem Fachmann bekannt und beispielsweise Stabilisatoren, grenzflächenaktive Substanzen, Flammschutzmittel und Kettenverlängerer.

Stabilisatoren werden auch als Schaumstabilisatoren bezeichnet. Unter Stabilisatoren werden im Rahmen der vorliegenden Erfindung Stoffe verstanden, welche die Ausbildung einer regelmäßigen Zellstruktur bei der Bildung des Schaumstoffs fördern. Geeignete Stabilisatoren sind beispielsweise silikonhaltige Schaumstabilisatoren wie Siloxan-Oxalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Tolouidin, Bisphenol A, alkyliertem Bisphenol A, Polyvinylalkohol sowie weitere Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Tolouidin, Formaldehyd und Naphthol, Formaldehyd und Alkylnaphthol sowie Formaldehyd und Bisphenol A oder Mischungen aus zwei oder mehreren dieser Schaumstabilisatoren.

Grenzflächenaktive Substanzen werden auch als oberflächenaktive Substanzen bezeichnet. Unter grenzflächenaktiven Substanzen werden Verbindungen verstanden, welche zur Unterstützung der Homogenisierung der Ausgangsstoffe dienen und gegebenenfalls auch geeignet sind, die Zellstruktur der Schaumstoffe zu regulieren. Dazu zählen beispielsweise Emulgatoren wie Natriumsalze von Rizinusölsulfaten oder von Fettsäuren sowie Salze von Fettsäuren mit Aminen, z.B. ölsaures Diethylamin, stearinsaures Diethanolamin, rizinolsaures Diethanolamin, Salze von Sulfonsäuren, z.B. Alkali- oder Ammoniumsalze von Dodecylbenzoldisulfonsäure, Dinaphthylmethandisulfonsäure und Rizinolsäure.

Als Flammschutzmittel können beispielsweise organische Phosphorsäure- und/oder Phosphonsäureester eingesetzt werden. Vorzugsweise werden gegenüber Isocyanatgruppen nicht-reaktive Verbindungen eingesetzt. Auch Chlor-enthaltende Phosphorsäureester gehören zu den bevorzugten Verbindungen. Geeignete Flammschutzmittel sind beispielsweise Tris-(2-chlorpropyl)phosphat, Triethylphosphat, Diphenylkresylphosphat, Diethylethanphosphinat, Trikresylphosphat, Tris-(2-chlorethyl)-phosphat, Tris-(1,3-dichlorpropyl)-phosphat, Tris-(2,3-dibrompropyl)-phosphat, Tetrakis-(2-chlorethyl)-ethylendiphosphat, Dimethylmethanphosphonat, Diethanolaminomethylphosphonsäure-Diethylester sowie handelsübliche halogenierte Flammschutzpolyole.

Daneben können beispielsweise auch Brom-enthaltende Flammschutzmittel zum Einsatz kommen. Als Brom-enthaltende Flammschutzmittel werden vorzugsweise Verbindungen eingesetzt, die gegenüber der Isocyanatgruppe reaktiv sind. Derartige Verbindungen sind beispielsweise Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Außer den bereits genannten halogensubstituierten Phosphaten können beispielsweise auch anorganische oder organische Flammschutzmittel wie roter Phosphor, Aluminiumoxidhydrat, Antimontrioxid, Arsenoxid, Ammoniumpolyphosphat und Calciumsulfat, Blähgraphit oder Cyanursäurederivate wie z.B. Melamin oder Mischungen aus zwei Flammschutzmitteln wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-Polyadditionsprodukte verwendet werden.

Unter Kettenverlängerern werden bifunktionelle Verbindungen verstanden. Derartige Verbindungen sind dem Fachmann als solche bekannt. Geeignete Kettenverlängerer sind beispielsweise aliphatische, cycloaliphatische und/oder aromatische Diole mit zwei bis vierzehn, vorzugsweise zwei bis zehn Kohlenstoffatomen, wie Ethylenglycol, 1,2-Propandiol, 1,3-Propandiol, 1,2-Pentandiol, 1,3-Pentandiol, 1,10-Dekandiol, 1,2-Dihydroxycyclohexan, 1,3-Dihydroxycyclohexan, 1,4-Dihydroxycyclohexan, Diethylenglycol, Triethylenglycol, Dipropylenglycol, Tripropylenglycol, 1,4-Butandiol, 1,6-Hexandiol und Bis-(2-hydroxyethyl)-hydrochinon.

Die Summe der Gewichtsprozente der in der reaktiven Mischung (rM) enthaltenen Komponenten (A), (B) und (C) sowie gegebenenfalls der Komponenten (D) und (E) addieren sich üblicherweise zu 100 %.

Erfindungsgemäß wird der Schaumstoff hergestellt durch Polymerisation der reaktiven Mischung (rM). Die Polymerisation der reaktiven Mischung (rM) kann nach allen dem Fachmann bekannten Methoden erfolgen.

Üblicherweise werden die Komponenten (A) bis (C) sowie gegebenenfalls (D) und (E) miteinander gemischt und dann polymerisiert. Dabei können alle Komponenten auf einmal miteinander gemischt werden; ebenso ist es möglich, beispielsweise zwei oder mehrere der Komponenten (A) bis (C) sowie gegebenenfalls (D) und (E) vorzumischen und dann die übrigen Komponenten hinzuzugeben. Diese Ausführungsform ist bevorzugt. Dabei ist es insbesondere bevorzugt, wenn die Komponenten (A) und (B) sowie gegebenenfalls (D) und (E) vorgemischt werden und anschließend die Komponente (C) zugegeben wird unter Erhalt der reaktiven Mischung (rM).

Die Polymerisation der reaktiven Mischung (rM) kann dann bei beliebiger Temperatur erfolgen. Üblicherweise wird unterschieden zwischen der Mischtemperatur, der Werkzeugtemperatur und der Temperatur im Schaumstoff bei der Reaktion.

Die Mischtemperatur ist die Temperatur, bei der die in der reaktiven Mischung (rM) enthaltenen Komponenten (A), (B) und (C) sowie gegebenenfalls (D) und (E) gemischt werden. Beim Mischen startet üblicherweise bereits die Polymerisation der reaktiven Mischung (rM), welche exotherm verläuft. Dadurch erhöht sich die Temperatur, sodass die Temperatur im Schaumstoff bei der Reaktion im Allgemeinen höher ist als die Mischtemperatur. Die Werkzeugtemperatur ist die Temperatur des Werkzeugs, in das die reaktive Mischung (rM) eingebracht wird.

Vorzugsweise liegt die Mischtemperatur bei der reaktiven Mischung (rM) im Bereich von 10 bis 200 °C, bevorzugt im Bereich von 15 bis 100 °C, insbesondere bevorzugt im Bereich von 20 bis 80 °C und am meisten bevorzugt im Bereich von 20 bis 55 °C.

Die Polymerisation kann bei beliebigem Druck stattfinden.

Die reaktive Mischung (rM) wird üblicherweise während oder im Anschluss an ihre Polymerisation in einen Bereich niedrigeren Drucks überführt, wobei sie aufschäumt unter Erhalt des Schaumstoffs.

Verfahren zum Überführen der reaktiven Mischung (rM) in einen Bereich niedrigeren Drucks sind dem Fachmann bekannt und beispielsweise die Extrusion.

Der Schaumstoff ist ein Polyurethanschaumstoff, ein Polyisocyanuratschaumstoff oder ein Polyharnstoffschaumstoff, bevorzugt ein Polyisocyanatschaumstoff oder ein Polyurethanschaumstoff, am meisten bevorzugt ein Polyurethanschaumstoff.

Beispielsweise bildet sich ein Polyurethanschaumstoff, wenn als Komponente (A) mindestens ein Polyetherpolyol eingesetzt wird.

Ein Polyisocyanuratschaumstoff bildet sich beispielsweise, wenn die Komponente (C) auch mit sich selbst reagiert, beispielsweise durch Zusatz geeigneter Katalysatoren, durch einen Überschuss an Komponente (C) und/oder durch erhöhte Temperaturen.

Typischerweise wird als Komponente (A) dann mindestens ein Polyesterpolyol eingesetzt.

Ein Polyharnstoffschaumstoff wird beispielsweise erhalten, wenn als Komponente (A) mindestens ein Polyamin eingesetzt wird. Außerdem entsteht ein Polyharnstoffschaumstoff durch die Reaktion von Isocyanaten (Komponente (C)) mit Wasser in-situ.

Es versteht sich von selbst, dass Polyurethanschaumstoffe auch beispielsweise Iscyanurateineiten, Allophanateinheiten, Harnstoffeinheiten, Carbodiimideinheiten, Biureteinheiten, Uretonimineinheiten, sowie gegebenenfalls weitere Einheiten die sich bei Additionsreaktionen von Polyisocyanaten bilden können und/oder die bereits in der Komponente (A) oder (C) enthalten waren, enthalten können. Die Mehrheit der durch Reaktion der Komponente (A) mit der Komponente (C) gebildeten Einheiten sind bei Polyurethanschaumstoffen allerdings Polyurethaneinheiten.

Ebenso können Polyisocyanuratschaumstoffe auch beispielsweise Urethaneineiten, Allophanateinheiten, Harnstoffeinheiten, Carbodiimideinheiten, Biureteinheiten, Uretonimineinheiten, sowie gegebenenfalls weitere Einheiten die sich bei Additionsreaktionen von Polyisocyanaten bilden können und/oder die bereits in den Komponenten (A) oder (C) enthalten waren, enthalten. Die Mehrheit der durch Reaktion der Komponente (A) mit der Komponente (C) gebildeten Einheiten sind bei Polyisocyanuratschaumstoffen allerdings Isocyanurateinheiten.

Ebenso können Polyharnstoffschaumstoffe auch beispielsweise Urethaneineiten, Allophanateinheiten, Isocyanurateinheiten, Carbodiimideinheiten, Biureteinheiten, Uretonimineinheiten, sowie gegebenenfalls weitere Einheiten die sich bei Additionsreaktionen von Polyisocyanaten bilden können und/oder die bereits in den Komponenten (A) oder (C) enthalten waren, enthalten. Die Mehrheit der durch Reaktion der Komponente (A) mit der Komponente (C) gebildeten Einheiten sind bei Polyharnstoffschaumstoffen allerdings Harnstoffeinheiten.

Der hergestellte Schaumstoff weist üblicherweise eine Glasübergangstemperatur von mindestens 80 °C, bevorzugt von mindestens 110 °C und insbesondere bevorzugt von mindestens 130 °C, auf, bestimmt mittels Differenzthermoanalyse (DTA; differential scanning calorimetry; DSC). Die Glasübergangstemperatur des Schaumstoffs liegt im Allgemeinen bei höchstens 400 °C, bevorzugt bei höchstens 300 °C und insbesondere bevorzugt bei höchstens 200 °C, bestimmt mittels Differenzthermoanalyse (DTA).

Der erfindungsgemäße Schaumstoff kann beliebige Größen aufweisen. Bezogen auf ein rechtwinkliges Koordinatensystem wird die Länge des Schaumstoffs als x-Richtung bezeichnet, die Breite als y-Richtung und die Dicke als z-Richtung.

Üblicherweise weist der Schaumstoff eine Dicke (z-Richtung) im Bereich von 4 bis 2000 mm, vorzugsweise im Bereich von 5 bis 1000 mm, insbesondere bevorzugt im Bereich von 10 bis 500 mm, eine Länge (x-Richtung) von mindestens 200 mm, vorzugsweise von mindestens 400 mm, und eine Breite (y-Richtung) von mindestens 200 mm, vorzugsweise von mindestens 400 mm, auf.

Der Schaumstoff weist üblicherweise eine Länge (x-Richtung) von maximal 15000 mm, bevorzugt von maximal 2500 mm, und/oder eine Breite (y-Richtung) von maximal 4000 mm, bevorzugt von maximal 2500 mm, auf.

In einer bevorzugten Ausführungsform weist der durch Polymerisation der reaktiven Mischung (rM) hergestellte Schaumstoff eine versiegelte (geschlossene) Oberfläche mit hoher Oberflächengüte auf. Unter dem Begriff "geschlossene Oberfläche" wird im Rahmen der vorliegenden Erfindung Folgendes verstanden: Die geschlossene Oberfläche wird durch licht- oder elektronenmikroskopische Aufnahmen ausgewertet. Anhand von Bildanalysen wird der Flächenanteil der geöffneten Schaumzellen, bezogen auf die Gesamtoberfläche, bewertet. Schaumstoffe mit geschlossener Oberfläche sind definiert als (1 - Flächenanteil der geöffneten Schaumzellen) / Gesamtoberfläche > 30 %, vorzugsweise > 50 %, mehr bevorzugt > 80 %, insbesondere bevorzugt > 95 %.

Bevorzugt ist daher auch ein Formkörper, bei dem die Gesamtoberfläche des Formkörpers zu mehr als 30 %, vorzugsweise zu mehr als 50 %, mehr bevorzugt zu mehr als 80 %, insbesondere bevorzugt zu mehr als 95 %, geschlossen ist.

Weiterhin bevorzugt ist der Schaumstoff zu mindestens 80 %, mehr bevorzugt zu mindestens 95 %, besonders bevorzugt zu mindestens 98 % geschlossenzellig.

Die Geschlossenzelligkeit des Schaumstoffs wird nach DIN ISO 4590 bestimmt (Stand deutsche Version 2003). Die Geschlossenzelligkeit beschreibt den Volumenanteil geschlossener Zellen am Gesamtvolumen des Schaumstoffs.

Die geschlossene Oberfläche ergibt sich üblicherweise unmittelbar aus der Herstellung des Schaumstoffs durch Polymerisation der reaktiven Mischung (rM). Dies ist dem Fachmann bekannt.

Ebenso ist es bevorzugt, dass die Oberfläche von mindestens einer Seite des Formkörpers mindestens eine Vertiefung aufweist. Vorzugsweise ist die Vertiefung ein Schlitz oder ein Loch.

Erfindungsgemäß umfasst der Formkörper außer dem Schaumstoff mindestens eine Faser (F).

Die im Formkörper enthaltene Faser (F) ist eine einzelne Faser oder ein Faserbündel, vorzugsweise ein Faserbündel. Als Faser (F) eignen sich alle dem Fachmann bekannten Materialien, die Fasern bilden können. Beispielsweise ist die Faser (F) eine organische, anorganische, metallische, keramische Faser oder eine Kombination daraus, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser, eine polymere Faser ist vorzugsweise eine Faser aus Polyester, Polyamid, Polyaramid, Polyethylen, Polyurethan, Polyvinylchlorid, Polyimid und/oder Polyamidimid, eine Naturfaser ist vorzugsweise eine Faser aus Sisal, Hanf, Flachs, Bambus, Kokos und/oder Jute.

In einer Ausführungsform werden Faserbündel eingesetzt. Die Faserbündel setzen sich aus mehreren einzelnen Fasern (Filamenten) zusammen. Die Anzahl der Einzelfasern pro Bündel beträgt mindestens 10, bevorzugt 100 bis 100 000, besonders bevorzugt 300 bis 10 000 bei Glasfasern und 1000 bis 50 000 bei Kohlenstofffasern, und insbesondere bevorzugt 500 bis 5 000 bei Glasfasern und 2000 bis 20 000 bei Kohlenstofffasern.

Erfindungsgemäß befindet sich die mindestens eine Faser (F) mit einem Faserbereich (FB2) innerhalb des Formkörpers und ist von dem Extrusionsschaumstoff umschlossen, während ein Faserbereich (FB1) der Faser (F) aus einer ersten Seite des Formkörpers herausragt und ein Faserbereich (FB3) der Faser (F) aus einer zweiten Seite des Formkörpers herausragt.

Der Faserbereich (FB1), der Faserbereich (FB2) und der Faserbereich (FB3) können jeweils einen beliebigen Anteil der Gesamtlänge der Faser (F) ausmachen. In einer Ausführungsform machen der Faserbereich (FB1) und der Faserbereich (FB3) jeweils unabhängig voneinander 1 bis 45 %, vorzugsweise 2 bis 40 % und besonders bevorzugt 5 bis 30 %, und der Faserbereich (FB2) 10 bis 98 %, vorzugsweise 20 bis 96 %, besonders bevorzugt 40 bis 90 % der Gesamtlänge der Faser (F) aus.

In einer weiteren bevorzugten Ausführungsform liegt die erste Seite des Formkörpers, aus der der Faserbereich (FB1) der Faser (F) herausragt, der zweiten Seite des Formkörpers gegenüber, aus der der Faserbereich (FB3) der Faser (F) herausragt.

Die Faser (F) ist bevorzugt in einem Winkel $\alpha$ relativ zu Dickenrichtung (d) des Formkörpers bzw. zur Orthogonalen (der Oberfläche) der ersten Seite (2) des Formkörpers in den Formkörper eingebracht. Der Winkel $\alpha$ kann beliebige Werte von 0 bis 90° annehmen. Beispielsweise ist die Faser (F) in einem Winkel $\alpha$ von 0 bis 60°, vorzugsweise von 0 bis 50°, mehr bevorzugt von 0 bis 15° oder von 10 bis 70 °C, bevorzugt von 30 bis 60 °C, besonders bevorzugt von 30 bis 50°, noch mehr bevorzugt von 30 bis 45°, insbesondere von 45°, relativ zur Dickenrichtung (d) des Formkörpers in den Reaktivschaumstoff eingebracht.

In einer weiteren Ausführungsform werden zumindest zwei Fasern (F) in zwei unterschiedlichen Winkeln $\alpha$, $\alpha_1$ und $\alpha_2$, eingebracht, wobei der Winkel $\alpha$ vorzugsweise im Bereich von 0° bis 15° und der zweite Winkel $\alpha_2$ vorzugsweise im Bereich von 30 bis 50° liegt, insbesondere bevorzugt liegt $\alpha_1$ im Bereich von 0° bis 5° und $\alpha_2$ im Bereich von 40 bis 50°.

Vorzugsweise enthält ein erfindungsgemäßer Formkörper eine Vielzahl von Fasern (F), vorzugsweise als Faserbündel, und/oder umfasst mehr als 10 Fasern (F) oder Faserbündel pro $m^2$, bevorzugt mehr als 1000 pro $m^2$, besonders bevorzugt 4000 bis 40 000 pro $m^2$. Vorzugsweise weisen sämtliche Fasern (F) im erfindungsgemäßen Formkörper den gleichen Winkel $\alpha$ oder zumindest einen annähernd gleichen Winkel (Abweichung von maximal $^+$/- 5°, vorzugsweise $^+$/- 2°, besonders bevorzugt $^+$/- 1°) auf.

Sämtliche Fasern (F) können parallel zueinander im Formkörper vorliegen. Ebenso ist es möglich und erfindungsgemäß bevorzugt, dass zwei oder mehr Fasern (F) in einem Winkel $\beta$ zueinander in dem Formkörper vorliegen. Unter dem Winkel $\beta$ wird im Rahmen der vorliegenden Erfindung der Winkel zwischen der senkrechten Projektion einer ersten Faser (F1) auf die Oberfläche der ersten Seite des Formkörpers und der senkrechten Projektion einer zweiten Faser (F2) auf die Oberfläche des Formkörpers verstanden, wobei beide Fasern in den Formkörper eingebracht sind.

Der Winkel $\beta$ liegt vorzugsweise im Bereich $\beta = 360°/n$, wobei n eine ganzzahlige Zahl ist. Bevorzugt liegt n im Bereich von 2 bis 6, besonders bevorzugt im Bereich von 2 bis 4. Beispielsweise liegt der Winkel $\beta$ bei 90°, 120° oder 180°. In einer weiteren Ausführungsform liegt der Winkel $\beta$ im Bereich von 80 bis 100°, im Bereich von 110 bis 130° oder im Bereich von 170 bis 190°. In einer weiteren Ausführungsform werden mehr als zwei Fasern (F) in einem Winkel $\beta$ zueinander eingebracht, beispielsweise drei oder vier Fasern (F). Diese drei oder vier Fasern (F) können jeweils zu den beiden benachbarten Fasern zwei unterschiedliche Winkel $\beta$, $\beta_1$ und $\beta_2$, aufweisen. Bevorzugt weisen alle Fasern (F) zu den beiden benachbarten Fasern (F) die gleichen Winkel $\beta=\beta_1=\beta2$ auf. Beispielsweise beträgt der Winkel $\beta$ 90°, dann beträgt der Winkel $\beta$, zwischen der ersten Faser (F1) und der zweiten Faser (F2) 90°, der Winkel $\beta_2$ zwischen der zweiten Faser (F2) und dritten Faser (F3) 90°, der Winkel $\beta_3$ zwischen der dritten und vierten Faser (F4) 90 ° und der Winkel $\beta_4$ zwischen der vierten Faser (F4) und der ersten Faser (F1) ebenfalls 90 °. Als Winkel $\beta$ zwischen der ersten Faser (F1) (Referenz) und der zweiten (F2), dritten (F3) und vierten Faser (F4) ergeben sich dann im Uhrzeigersinn 90°, 180° und 270°. Analoge Betrachtungen gelten für die anderen möglichen Winkel.

Die erste Faser (F1) weist dann eine erste Richtung auf, die zweite Faser (F2), die in einem Winkel β zur ersten Faser (F1) angeordnet ist, weist eine zweite Richtung auf. Bevorzugt liegen in der ersten Richtung und der zweiten Richtung eine ähnliche Anzahl von Fasern. Unter "ähnlich" wird vorliegend verstanden, dass der Unterschied zwischen der Anzahl der Fasern in jeder Richtung relativ zu der anderen Richtung < 30 %, besonders bevorzugt < 10 % und insbesondere bevorzugt < 2 % ist.

Die Fasern oder Faserbündel können in irregulären oder regulären Mustern eingebracht werden. Bevorzugt ist das Einbringen von Fasern oder Faserbündeln in regulären Mustern. Unter "regulären Mustern" wird im Rahmen der vorliegenden Erfindung verstanden, dass sämtliche Fasern parallel zueinander ausgerichtet sind und dass mindestens eine Faser oder Faserbündel zu allen direkt benachbarten Fasern oder Faserbündeln den gleichen Abstand (a) aufweist. Insbesondere bevorzugt weisen alle Fasern oder Faserbündel zu allen direkt benachbarten Fasern oder Faserbündeln den gleichen Abstand auf.

In einer weiteren bevorzugten Ausführungsform werden die Fasern oder Faserbündel so eingebracht, dass sie, bezogen auf ein rechtwinkliges Koordinatensystem, bei dem die Dickenrichtung (d) der z-Richtung entspricht, entlang der x-Richtung jeweils zueinander den gleichen Abstand ($a_x$) haben und entlang der y-Richtung den gleichen Abstand ($a_y$). Insbesondere bevorzugt weisen sie in x-Richtung und in y-Richtung den gleichen Abstand (a) auf, wobei $a=a_x=a_y$, ist.

Liegen zwei oder mehr Fasern (F) in einem Winkel β zueinander vor, so weisen die ersten Fasern (F1), die parallel zueinander vorliegen, vorzugsweise ein reguläres Muster mit einem ersten Abstand ($a_1$) auf und die zweiten Fasern (F2), die parallel zueinander vorliegen und in einem Winkel β zu den ersten Fasern (F1) liegen, vorzugsweise ein reguläres Muster mit einem zweiten Abstand ($a_2$). In einer bevorzugten Ausführungsform weisen die ersten Fasern (F1) und die zweiten Fasern (F2) jeweils ein reguläres Muster mit einem Abstand (a) auf. Dann gilt $a=a_1=a_2$.

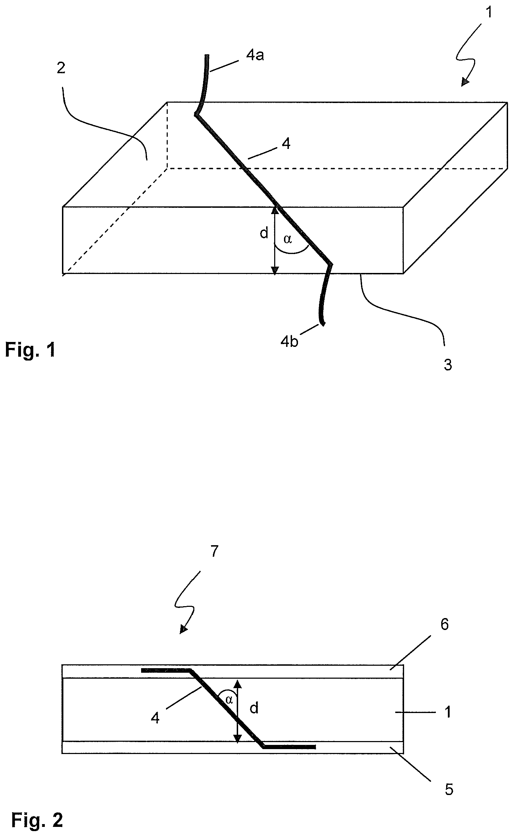

Werden Fasern oder Faserbündel mit einem Winkel β zueinander in den Schaumstoff eingebracht, so ist es bevorzugt, dass die Fasern oder Faserbündel innerhalb jeder Richtung einem regulären Muster folgen. Figur 1 zeigt eine schematische Darstellung einer bevorzugten Ausführungsform des erfindungsgemäßen Formkörpers aus Schaumstoff (1) in einer perspektivischen Ansicht. (2) stellt dabei (die Oberfläche) einer ersten Seite des Formkörpers dar, während (3) eine zweite Seite des entsprechenden Formkörpers darstellt. Wie aus Figur 1 weiterhin ersichtlich, liegt die erste Seite (2) des Formkörpers gegenüber der zweiten Seite (3) dieses Formkörpers. Die Faser (F) ist durch (4) dargestellt. Ein Ende dieser Faser (4a) und somit der Faserbereich (FB1) ragt aus der ersten Seite (2) des Formkörpers heraus, während das andere Ende (4b) der Faser, das den Faserbereich (FB3) darstellt, aus der zweiten Seite (3) des Formkörpers herausragt. Der mittlere Faserbereich (FB2) befindet sich innerhalb des Formkörpers und ist somit von dem Schaumstoff umschlossen.

In Figur 1 befindet sich die Faser (4), die beispielsweise eine einzelne Faser oder ein Faserbündel, vorzugsweise ein Faserbündel, ist, in einem Winkel α relativ zur Dickenrichtung (d) des Formkörpers bzw. zur Orthogonalen (der Oberfläche) der ersten Seite (2) des Formkörpers. Der Winkel α kann beliebige Werte von 0 bis 90° annehmen, normalerweise beträgt er 0 bis 60°, vorzugsweise 0 bis 50°, besonders bevorzugt 0 bis 15° oder 10 bis 70 °, bevorzugt 30 bis 60 °, mehr bevorzugt 30 bis 50°, ganz besonders 30 bis 45°, insbesondere 45°. In Figur 1 ist der Übersichtlichkeit halber nur eine einzelne Faser (F) dargestellt.

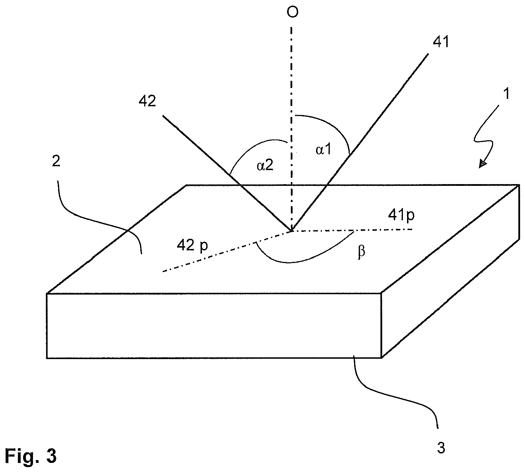

Figur 3 zeigt beispielhaft eine schematische Darstellung eines Teils der verschiedenen Winkel. Der in Figur 3 dargestellte Formkörper aus Schaumstoff (1) enthält eine erste Faser (41) und eine zweite Faser (42). In Figur 3 ist zur besseren Übersichtlichkeit lediglich der Faserbereich (FB1), der aus der ersten Seite (2) des Formkörpers herausragt, für die beiden Fasern (41) und (42) eingezeichnet. Der Faserbereich (FB1) wird im Rahmen von Figur 3 als Verlängerung des Faserbereichs (FB2), der von dem Schaumstoff umschlossen ist angesehen. Die erste Faser (41) bildet relativ zur Orthogonalen (O) der Oberfläche der ersten Seite (2) des Formkörpers einen ersten Winkel α (α1). Die zweite Faser (42) bildet relativ zur Orthogonalen (O) der Oberfläche der ersten Seite (2) einen zweiten Winkel α (α2). Die senkrechte Projektion der ersten Faser (41) auf die erste Seite (2) des Formkörpers (41p) bildet mit der senkrechten Projektion der zweiten Faser (42) auf die erste Seite (2) des Formkörpers (42p) den Winkel β.

Gegenstand der vorliegenden Erfindung ist außerdem ein Paneel, das mindestens einen erfindungsgemäßen Formkörper und mindestens eine Schicht (S1) umfasst.

Ein "Paneel" kann gegebenenfalls in Fachkreisen auch als "Sandwich", "Sandwichmaterial", "Laminat" und/oder "Kompositartikel" bezeichnet werden.

In einer bevorzugten Ausführungsform des Paneels weist das Paneel zwei Schichten (S1) auf, und die beiden Schichten (S1) sind jeweils an einer Seite des Formkörpers angebracht, die der jeweils anderen Seite im Formkörper gegenüberliegt.

In einer Ausführungsform des erfindungsgemäßen Paneels umfasst die Schicht (S1) mindestens ein Harz, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al. (Advances in Polymer Science, 184, S. 1 - 95, 2005), Pham et al. (Ullmann's Encyclopedia of Industrial Chemistry, Vol. 13, 2012), Fahnler (Polyamide, Kunststoff Handbuch 3/4, 1998) und Younes (WO12134878 A2).

Erfindungsgemäß bevorzugt ist außerdem ein Paneel, bei dem

i) der Faserbereich (FB1) der Faser (F) teilweise oder vollständig, vorzugsweise vollständig, mit der ersten Schicht (S1) in Kontakt ist, und/oder

ii) der Faserbereich (FB3) der Faser (F) teilweise oder vollständig, vorzugsweise vollständig, mit der zweiten Schicht (S1) in Kontakt ist, und/oder

iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, mehr bevorzugt aus porösen flächigen Fasermaterialien oder porösen polymeren Folien, insbesondere bevorzugt aus Papier, Glasfasern oder Kohlenstofffasern in Form von Vliesen, Gelegen oder Geweben.

Als Porosität wird das Verhältnis (dimensionslos) von Hohlraumvolumen (Porenvolumen) zu dem Gesamtvolumen eines Reaktivschaumstoffs bezeichnet. Sie wird beispielsweise durch bildanalytische Auswertung mikroskopischer Aufnahmen bestimmt, indem das Hohlraum- bzw. Porenvolumen durch das Gesamtvolumen geteilt wird. Die Gesamtporosität eines Stoffes setzt sich zusammen aus der Summe der Hohlräume, die untereinander und mit der Umgebung in Verbindung stehen (offene Porosität) und den nicht miteinander verbundenen Hohlräumen (geschlossene Porosität). Bevorzugt sind Schichten (S2), die eine hohe offene Porosität aufweisen.

In einer weiteren erfindungsgemäßen Ausführungsform des Paneels enthält die mindestens eine Schicht (S1) zusätzlich mindestens ein faserförmiges Material, wobei

i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 $g/m^2$ enthält, und/oder

ii) das faserförmige Material Fasern aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern enthält.

Für die Naturfasern und die polymeren Fasern gelten die zuvor beschriebenen Ausführungen.

Eine Schicht (S1), die zusätzlich mindestens ein faserförmiges Material enthält, wird auch als faserverstärkte Schicht, insbesondere als faserverstärkte Harzschicht, sofern die Schicht (S1) ein Harz umfasst, bezeichnet.

Figur 2 zeigt eine weitere bevorzugte Ausführungsform der vorliegenden Erfindung. In einer zweidimensionalen Seitansicht ist ein erfindungsgemäßes Paneel (7) dargestellt, das einen erfindungsgemäßen Formkörper (1) umfasst, wie beispielsweise vorstehend im Rahmen der Ausführungsform zu Figur 1 dargestellt. Soweit nicht anders ausgeführt, haben die Bezugszeichen und sonstigen Abkürzungen in den Figuren 1 und 2 die gleiche Bedeutung.

Bei der Ausführungsform gemäß Figur 2 umfasst das erfindungsgemäße Paneel zwei Schichten (S1), die durch (5) und (6) dargestellt sind. Die beiden Schichten (5) und (6) befinden sich somit an jeweils zu einander gegenüberliegenden Seiten des Formkörpers (1). Bei den beiden Schichten (5) und (6) handelt es sich vorzugsweise um Harzschichten oder faserverstärkte Harzschichten. Wie aus Figur 2 weiterhin ersichtlich, sind die beiden Enden der Faser (4) von der jeweiligen Schicht (5) bzw. (6) umschlossen.

Gegebenenfalls können zwischen dem Formkörper (1) und der ersten Schicht (5) und/oder zwischen dem Formkörper (1) und der zweiten Schicht (6) eine oder mehrere weitere Schichten enthalten sein. Wie vorstehend für Figur 1 beschrieben, ist auch in Figur 2 der Einfachheit halber eine einzige Faser (F) durch (4) dargestellt. Hinsichtlich der Anzahl an Fasern bzw. Faserbündeln in der Praxis gelten die sinngemäßen Aussagen wie vorstehend für Figur 1 aufgeführt.

Darüber hinaus ist ein Paneel bevorzugt, bei dem zumindest eine der folgenden Alternativen erfüllt ist:

i) der im Paneel enthaltene Formkörper enthält mindestens eine Seite, die nicht mechanisch und/oder thermisch bearbeitet wurde, und/oder

ii) der Schaumstoff des Formkörpers weist eine Harzaufnahme von weniger als 1000 $g/m^2$, bevorzugt von weniger als 500 $g/m^2$ und besonders bevorzugt von weniger als 100 $g/m^2$ auf, und/oder

iii) das Paneel weist eine Schälfestigkeit von mehr als 200 $J/m^2$, bevorzugt von mehr als 500 $J/m^2$, besonders

bevorzugt von mehr als 2000 J/m$^2$ auf, und/oder

iv) der Schaumstoff des im Paneel enthaltenen Formkörpers weist eine spezifische Scherfestigkeit im Bereich von 2 bis 25 kPa/(kg/m$^3$), bevorzugt im Bereich von 3 bis 15 kPa/(kg/m$^3$), besonders bevorzugt im Bereich von 4 bis 12 kPa/(kg/m$^3$) auf, und/oder

v) der Schaumstoff des im Paneel enthaltenen Formkörpers weist ein Schubmodul gemessen parallel zu der mindestens einen Schicht (S1) im Bereich von 0,05 bis 0,6 MPa/(kg/m$^3$), bevorzugt im Bereich von 0,05 bis 0,5 MPa/(kg/m$^3$), besonders bevorzugt im Bereich von 0,05 bis 0,2 MPa/(kg/m$^3$) auf, und/oder

vi) der im Paneel enthaltene Formkörper weist im Paneel eine spezifische Scherfestigkeit gemessen parallel zu der mindestens einen Schicht (S1) von mindestens 5 kPa/(kg/m$^3$), bevorzugt von mindestens 8 kPa/(kg/m$^3$), besonders bevorzugt von mindestens 12 kPa/(kg/m$^3$) auf, und/oder

vii) der im Paneel enthaltene Formkörper weist im Paneel ein Schubmodul gemessen parallel zu der mindestens einen Schicht (S1) von mindestens 0,2 MPa/(kg/m$^3$), bevorzugt von mindestens 0,6 MPa/(kg/m$^3$), besonders bevorzugt von mindestens 1,0 MPa/(kg/m$^3$), auf.

Die spezifische Scherfestigkeit und das Schubmodul werden gemäß DIN 53294 (Stand: 1982) und die Dichte nach ISO 845 (Stand: 2007) bestimmt.

Die Schälfestigkeit des Paneels wird mit single cantilever beam (SCB)-Proben bestimmt. Die Dicke der Formkörper liegt bei 20 mm, die Schichten (S1) bestehen aus jeweils etwa 2 mm dicken quasiisotropen glasfaserverstärkten Epoxidharzschichten. Die Paneele werden dann in einer Zwick Z050 Zugprüfmaschine mit einer Geschwindigkeit von 5 mm/min geprüft, wobei das Paneel drei- bis viermal be- und entlastet wird. Das Risswachstum bzw. der Zuwachs bei jedem Belastungszyklus (∆a) wird optisch ermittelt. Aus dem Kraft-Weg-Verlauf wird die Risswachstumsenergie (∆U) ermittelt. Daraus wird die Risszähigkeit bzw. Schälfestigkeit ermittelt als

$$G_{IC} = \frac{\Delta U}{B\,\Delta a}$$

 mit B als Probenbreite.

Zur Bestimmung der Harzaufnahme werden neben den eingesetzten Harzsystemen, dem Schaumstoff und Glasgelegen die folgende Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele, nachfolgend auch als Sandwichmaterialien bezeichnet, werden aus den Formkörpern durch Aufbringung faserverstärkter Decklagen mittels Vakuuminfusion hergestellt. An der Ober- und Unterseite der (faserverstärkten) Schaumstoffe werden je zwei Lagen Quadrax-Glasgelege (Roving: E-Glass SE1500, OCV; Textil: Saertex, isotropes Laminat [0°/-45°/90°45°] mit je 1200 g/m$^2$) aufgebracht. Für die Bestimmung der Harzaufnahme wird zwischen dem Formkörper, nachfolgend auch als Kernmaterial bezeichnet, und dem Glasgelege, im Gegensatz zur standardmäßigen Herstellung der Paneele, eine Trennfolie eingelegt. Damit ist die Harzaufnahme des reinen Formkörpers bestimmbar. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 $^{+/-}$ 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Reaktivschaumstoffen und glasfaserverstärkten Decklagen bestehen.

Zu Beginn werden die Formkörper nach ISO 845 (Stand Oktober 2009) vermessen, um die Rohdichte des Schaumes zu erhalten. Nach dem Aushärten des Harzsystems werden die verarbeiteten Paneele besäumt, um überschüssige Harzansammlungen in den Randbereichen durch nicht passend anliegende Vakuumfolie zu eliminieren.

Anschließend werden die Decklagen entfernt und die enthaltenen Formkörper erneut durch ISO 845 vermessen. Aus der Differenz der Dichten ergibt sich die absolute Harzaufnahme. Durch Multiplikation mit der Dicke des Formkörpers ergibt sich die entsprechende Harzaufnahme in kg/m$^2$.

Gegenstand der vorliegenden Erfindung ist weiterhin ein Verfahren zur Herstellung des erfindungsgemäßen Formkörpers, wobei mindestens eine Faser (F) in den Schaumstoff teilweise eingebracht wird, wodurch sich die Faser (F) mit dem Faserbereich (FB2) innerhalb des Formkörpers befindet und von dem Schaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt.

Zum Einbringen der Faser (F) und/oder eines Faserbündels eignen sich prinzipiell alle dem Fachmann bekannten Methoden. Geeignete Verfahren sind beispielsweise in WO 2006/125561 oder in WO 2011/012587 beschrieben.

In einer Ausführungsform des erfindungsgemäßen Verfahrens erfolgt das teilweise Einbringen der mindestens einen Faser (F) in den Schaumstoff durch Einnähen unter Verwendung einer Nadel, vorzugsweise erfolgt das teilweise Einbringen durch die Schritte a) bis f):

a) gegebenenfalls Aufbringen von mindestens einer Schicht (S2) auf mindestens eine Seite des Schaumstoffs,

b) Erzeugung von einem Loch je Faser (F) im Schaumstoff und gegebenenfalls in der Schicht (S2), wobei sich das Loch von einer ersten Seite zu einer zweiten Seite des Schaumstoffs und gegebenenfalls durch die Schicht (S2) erstreckt,

c) Bereitstellung von mindestens einer Faser (F) auf der zweiten Seite des Schaumstoffs,

d) Durchführen einer Nadel von der ersten Seite des Schaumstoffs durch das Loch zu der zweiten Seite des Schaumstoffs und gegebenenfalls Durchführung der Nadel durch die Schicht (S2),

e) Befestigen von mindestens einer Faser (F) an der Nadel auf der zweiten Seite des Schaumstoffs, und

f) Rückführen der Nadel samt Faser (F) durch das Loch, so dass die Faser (F) sich mit dem Faserbereich (FB2) innerhalb des Formkörpers befindet und von dem Schaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt,

besonders bevorzugt werden die Schritte b) und d) gleichzeitig durchgeführt.

In einer besonders bevorzugten Ausführungsform werden die Schritte b) und d) gleichzeitig durchgeführt. In dieser Ausführungsform wird das Loch von der ersten Seite zu der zweiten Seite des Schaumstoffs durch das Durchführen einer Nadel von der ersten Seite des Schaumstoffs zu der zweiten Seite des Schaumstoffs erzeugt.

In dieser Ausführungsform kann das Einbringen der mindestens einen Faser (F) beispielsweise die folgenden Schritte umfassen:

a) gegebenenfalls Aufbringen einer Schicht (S2) auf mindestens eine Seite des Schaumstoffs,

b) Bereitstellen von mindestens einer Faser (F) auf der zweiten Seite des Schaumstoffs,

c) Erzeugung von einem Loch je Faser (F) im Schaumstoff und gegebenenfalls in der Schicht (S2), wobei sich das Loch von der ersten Seite zu einer zweiten Seite des Schaumstoffs und gegebenenfalls durch die Schicht (S2) erstreckt und wobei die Erzeugung des Lochs durch das Durchführen einer Nadel durch den Schaumstoff und gegebenenfalls durch die Schicht (S2) erfolgt,

d) Befestigen von mindestens einer Faser (F) an der Nadel auf der zweiten Seite des Schaumstoffs,

e) Rückführen der Nadel samt Faser (F) durch das Loch, so dass die Faser (F) sich mit dem Faserbereich (FB2) innerhalb des Formkörpers befindet und von dem Schaumstoff umschlossen ist, während der Faserbereich (FB1) der Faser (F) aus einer ersten Seite des Formkörpers oder gegebenenfalls aus der Schicht (S2) herausragt und der Faserbereich (FB3) aus einer zweiten Seite des Formkörpers herausragt,

f) gegebenenfalls Abschneiden der Faser (F) an der zweiten Seite und

g) gegebenenfalls Aufschneiden der an der Nadel gebildeten Schlaufe der Faser (F).

In einer bevorzugten Ausführungsform wird als Nadel eine Hakennadel eingesetzt und mindestens eine Faser (F) in Schritt d) in die Hakennadel eingehängt.

In einer weiteren bevorzugten Ausführungsform werden mehrere Fasern (F) gleichzeitig in den Schaumstoff gemäß der vorher beschriebenen Schritte eingebracht.

Im erfindungsgemäßen Verfahren ist es außerdem bevorzugt, dass Vertiefungen im Formkörper teilweise oder vollständig vor dem Einbringen von mindestens einer Faser (F) in den Schaumstoff eingebracht werden.

Weiterhin Gegenstand der vorliegenden Erfindung ist ein Verfahren zur Herstellung des erfindungsgemäßen Paneels, bei dem die mindestens eine Schicht (S1) als reaktives viskoses Harz auf einen erfindungsgemäßen Formkörper erzeugt, aufgebracht und ausgehärtet wird, vorzugsweise durch Flüssigimprägnierverfahren, besonders bevorzugt durch Druck- bzw. vakuumunterstützte Imprägnierverfahren, insbesondere bevorzugt durch Vakuuminfusion oder druckunterstützte Injektionsverfahren, am meisten bevorzugt durch Vakuuminfusion. Flüssigimprägnierverfahren sind dem Fachmann als solche bekannt und werden beispielsweise in Wiley Encyclopedia of Composites (2nd Edition, Wiley, 2012), Parnas et al. (Liquid Composite Moulding, Hanser, 2000) und Williams et al. (Composites Part A, 27, S. 517 - 524, 1997) ausführlich beschrieben.

Zur Herstellung des erfindungsgemäßen Paneels können verschiedene Hilfsmaterialien eingesetzt werden. Geeignete Hilfsmaterialien für die Herstellung durch Vakuuminfusion sind beispielsweise Vakuumfolie, bevorzugt aus Nylon, Vakuumdichtband, Fließhilfe, bevorzugt aus Nylon, Trennfolie, bevorzugt aus Polyolefin, Abreißgewebe, bevorzugt aus Polyester sowie eine semipermeable Folie, vorzugsweise eine Membranfolie, besonders bevorzugt eine PTFE Membranfolie und Absaugvlies, bevorzugt aus Polyester. Die Wahl geeigneter Hilfsmaterialien richtet sich nach dem zu fertigenden Bauteil, dem gewählten Prozess und den eingesetzten Materialien, speziell dem Harzsystem. Beim Einsatz von Harzsystemen auf der Basis von Epoxid und Polyurethan werden bevorzugt Fließhilfen aus Nylon, Trennfolien aus Polyolefin, Abreißgewebe aus Polyester sowie eine semipermeable Folien als PTFE-Membranfolien und Absaugvliese aus Polyester eingesetzt.

Diese Hilfsmaterialien können auf verschiedene Arten bei den Verfahren zur Herstellung des erfindungsgemäßen Paneels eingesetzt werden. Paneele werden besonders bevorzugt aus den Formkörpern durch Aufbringung faserverstärkter Decklagen mittels Vakuuminfusion hergestellt. In einem typischen Aufbau werden zur Herstellung des erfindungsgemäßen Paneels an der Ober- und Unterseite der Formkörper faserförmige Materialien und ggf. weitere Schichten aufgebracht. Anschließend werden Abreißgewebe und Trennfolien platziert. Bei der Infusion des flüssigen Harzsystems kann mit Fließhilfen und / oder Membranfolien gearbeitet werden. Besonders bevorzugt sind die folgenden Varianten:

i) Einsatz einer Fließhilfe auf nur einer Seite des Aufbaus, und/oder

ii) Einsatz einer Fließhilfe auf beiden Seiten des Aufbaus, und/oder

iii) Aufbau mit einer semipermeablen Membran (VAP-Aufbau), diese wird vorzugsweise flächig über den Formkörper drapiert, auf dem Fließhilfen, Trennfolie und Abreißgewebe auf einer oder beiden Seiten eingesetzt werden und die semipermeable Membran durch Vakuumdichtband zur Formoberfläche hin abgedichtet wird, das Absaugvlies wird auf der Formkörper fremden Seite der semipermeablen Membran eingesetzt wodurch die Luft flächig nach oben evakuiert wird, und/oder

iv) Verwendung einer Vakuumtasche aus Membranfolie, die bevorzugt auf die gegenüberliegende Anguss-Seite des Formkörpers platziert wird, womit die Luft von der gegenüberliegenden Seite zum Anguss evakuiert wird.

Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Nach der Infusion des Harzsystems findet unter Aufrechterhaltung des Vakuums die Reaktion des Harzsystems statt.

Gegenstand der vorliegenden Erfindung ist außerdem die Verwendung des erfindungsgemäßen Formkörpers oder des erfindungsgemäßen Paneels für Rotorblätter, in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

Nachfolgend wird die vorliegende Erfindung anhand von Beispielen näher erläutert.

Beispiele

Herstellung der Schaumstoffe:

Der erfindungsgemäße Schaumstoff wurde durch ein kontinuierliches Doppelbandschäumverfahren hergestellt. Die Anlage besteht aus einem oberen und einem unteren Förderband. Die reaktive Mischung (rM) wurde kontinuierlich durch einen Hochdruckmischkopf zwischen ein unteres Trägermaterial und ein oberes Trägermaterial injiziert. Das untere Trägermaterial bestand aus einer Aluminiumfolie, das obere Trägermaterial bestand ebenfalls aus einer Aluminiumfolie. Anschließend wurde die reaktive Mischung (rM) expandiert und zwischen dem unteren und dem oberen Förderband kalibriert. Der erhaltene Schaumstoff wurde zu Platten geschnitten. Die Plattendicke betrug 50 mm. Die Abzugsgeschwindigkeit des Bands betrug 4,5 m/min bei einer Austragsrate von 18,1 kg/min. Vor weiteren Tests und der Verstärkung mit der mindestens einen Faser (F) und somit vor der Herstellung des Formkörpers wurden das obere Trägermaterial und das untere Trägermaterial abgezogen und die Platten für die weitere Verarbeitung auf 20 mm spanend gehobelt.

Die Zusammensetzung der reaktiven Mischung (rM) des Vergleichsbeispiels V2 und des erfindungsgemäßen Beispiels B1 sind in Tabelle 1 ebenso zu sehen wie das Molekulargewicht der Polyolkomponente (Komponente (A)) und der Anteil des Prepolymers in der Isocyanatkomponente (Komponente (B)).

Tabelle 1

| Komponente | | Beispiel B1 | | | | Vergleichsbeispiel V2 | | | |
|---|---|---|---|---|---|---|---|---|---|
| | | Gew.-Teile | $M_w$ [g/mol] | Funktionalität | | | Gew.-Teile | $M_w$ [g/mol] | Funktionalität |
| A | Polyol 1 | 20 | 4350 | 3 | | Polyol 4 | 56,5 | 500 | 4,3 |
| | Polyol 2 | 30 | 530 | 3,8 | | Polyol 5 | 20 | 400 | 3 |
| | Polyol 3 | 37 | 545 | 3,9 | | Polyol 6 | 6 | 300 | 4 |
| | Glyzerin | 5 | 92 | 3 | | | | | |
| B | Wasser | 1,3 | | | | Wasser | 1,9 | | |
| | Pentan | 14 | | | | Pentan | 7,5 | | |
| C | pMDI | 32 | | | | pMDI | 150 | | |
| | Prepolymer | 128 | | | | | | | |
| D | Kat 1 | 0,5 | | | | Kat 1 | 0,5 | | |
| | Kat 2 | 0,5 | | | | | | | |
| | Kat 3 | 3 | | | | Kat 3 | 3,8 | | |
| E | Stabilisator | 2 | | | | Stabilisator | 2 | | |
| | | | | | | TCPP | 15 | | |
| | Dipropylenglycol | 5 | 134 | 2 | | | | | |

Kat 1: s-Triazin
Kat 2: Bis-(2-dimethylaminoethyl)ether
Kat 3: N,N-Dimethylcyclohexylamin
Stabilisator: Tegostab B 8495 von Evonik
Prepolymer: Prepolymer aus 4,4' mMDI, Dipropylenglykol und Polypropylenglykol mit einem NCO-Gehalt von 22,9 % und einer mittleren Funktionalität von 2,2
pMDI: Mischung von 1,4'-Diphenylmethandiisocyanat mit höher-funktionellen Oligomeren und Isomeren (Roh-MDI) mit einem NCO-Gehalt von 31,5 % und einer mittleren Funktionalität von ca. 2,7
TCPP: tris-2-chlorisopropylphosphat

Die Eigenschaften der Schaumstoffe werden wie folgt bestimmt:

- Dichte: Die Dichte der reinen Schaumstoffe wird nach ISO 845 (Stand Oktober 2009) bestimmt.

- Geschlossenzelligkeit wird gemäß DIN EN ISO 4590:2003 bestimmt.

- Kerbschlagzähigkeit wird gemäß EN ISO 13802:2006 bestimmt.

- Der Schrumpf wird anhand eines Vakuumsinfusionsaufbaus herstellungsnah nachempfunden. Die Probe (Abmaße 150 x 150 x 20 mm$^3$) wird vor Testbeginn an 48 Messstellen auf der Oberfläche eindeutig markiert im Raster von 2 cm mit einem Randabstand von 1 cm. Die Dicke wird an den gekennzeichneten Stellen mit einer Genauigkeit von $\leq 0,05$ mm vermessen, die Länge und Breite wird einfach auf $\leq 1$mm und das Gewicht einmal auf $\leq 0,1$ g vermessen. Anschließend wird ein Mittelwert aus der Dickenmessung gebildet. Der Prüfaufbau erfolgt auf einer Metallplatte. Direkt unter- und oberhalb des Schaumstoffs bzw. Formkörpers wird eine Lage Polyester Abreißgewebe aufgelegt, um eine gleichmäßige Verteilung des Vakuumdrucks zu gewährleisten. Die Nylon Vakuumfolie wird mit Vakuumdichtband auf der Metallplatte befestigt; der Anschluss des Vakuums erfolgt neben dem zu prüfenden Schaumstoff bzw. Formkörper, aber direkt auf dem Abreißgewebe. Als Anschluss dient ein PE- oder PTFE Schlauch, auf den ein Nylon, PE oder PTFE Spiralschlauch aufgesetzt wird. Der Prüfaufbau wird anschließend für 4 Stunden bei 120°C in den Wärmeschrank gelegt, wobei permanent Vakuum anliegt. Nach dem Abkühlen der Probe wird die Dicke nochmalig an den 48 markierten Messpunkten vermessen, der Mittelwert gebildet und mit dem Mittelwert vor dem Test verglichen. Die Abweichung ist definiert durch

$$\varepsilon_t = \frac{\overline{t_1} - \overline{t_2}}{\overline{t_1}}$$

Mit $\varepsilon_t$ Schrumpf in Dickenrichtung, $\overline{t_1}$ Mittelwert der Dicke vor dem Versuch und $\overline{t_2}$ Mittelwert der Dicke nach dem Versuch.

- Der Abrieb wird auf einem pneumatisch angetriebenen Linearantrieb mit einer definierten Geschwindigkeit von 0,2 m/s und einer definierten Anpresskraft von 10 N für 50 Zyklen bei dem erfindungsgemäßen Schaumstoff durchgeführt, während für das Vergleichsbeispiel aufgrund des großen Abriebs nur 25 Zyklen verwendet wurden. Gemessen wird der Materialabtrag in mm bzw. Prozentual zur Anfangsdicke. Der zurückgelegte Weg pro Abriebzyklus beträgt 100 mm. Die Prüftemperatur betrug 23°C. Zum einen wird der Materialabtrag des zu testenden Schaumstoffes gegenüber einer Stahlplatte mit definierter Rauigkeit Rz = 127$\mu$m ermittelt und zum anderen durch Abrieb gegen eine Platte desselben Schaumstoffes. In beiden Verfahren wird jeweils nur der Abtrag des Testobjektes gemessen, nicht jedoch des etwaigen Konterparts (Metallplatte, Schaumstoffplatte). Um den Einfluss einer möglichen anistropischen Ausrichtung der Zellen in die Messung mit einfließen zu lassen, wird Gegenüber der Stahlplatte der Schaumstoff in der Ebene um 90° gedreht, sowie auch bei dem Reibversuch gegenüber sich selbst. Somit werden vier Kombinationen je Beispiel vermessen.

Die Rauigkeit $R_z$ ist die gemittelte Rauhtiefe, also das arithmetische Mittel aus den Einzelrauhtiefen fünf aneinandergrenzender Einzelmessstrecken. Die Einzelrauhtiefe $Z_i$ ist der Abstand zweier Parallelen zur mittleren Linie, die innerhalb der Einzelmessstrecke das Rauheitsprofil am höchsten bzw. am tiefsten Punkt berühren. X beschreibt bei kontinuierlichen Herstellprozessen die Extrusionsrichtung, bei diskontinuierlichen Prozessen die Blockrichtung mit der längeren Achse. Y beschreibt hingegen bei kontinuierlichen Herstellprozessen Richtung quer zur Extrusionsrichtung, bei diskontinuierlichen Prozessen die Blockrichtung quer zur X-Achse. Z ist bei beiden Verfahren als Steigrichtung (Dicke) des Schaumes während des Prozesses definiert.

- Die chemische Stabilität wird qualitativ in einem zweistufigen Prozess ermittelt. Es wird zuerst ein Quader des Schaumstoffes mit den Kantenlängen 50 x 10 x 5 mm$^3$ zum einen in das Harz und zum anderen in den zu verwendenden Härter in ein Reagenzglas zur Hälfte (25 mm) eingetaucht und für eine Zeit von 4 h bei 23 °C darin belassen. Anschließend wird qualitativ ausgewertet ob der Schaumstoff sich angelöst oder aufgelöst hat oder resistent war. Die zweite Stufe ist ein Infusionsversuch des Schaumstoffs mit anschließendem Aushärteverlauf nach Herstellervorgaben. Dieser Versuch kann mit dem Harzaufnahmeversuch kombiniert werden und somit eine teilweise quantitative Aussage generiert werden.

- Harzaufnahme: Für die Harzaufnahme werden Schaumstoffe nach spanender Entfernung der Oberfläche durch Hobeln verglichen. Neben den eingesetzten Harzsystemen, den Schaumstoffplatten und Glasgelegen werden die folgenden Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele werden aus den Formkörpern durch Aufbringung faserverstärkter Decklagen mittels Vakuuminfusion hergestellt. An der Ober- und Unterseite der Schaumstoffe werden je zwei Lagen Quadrax-Glasgelege (Roving: E-Glass SE1500, OCV; Textil: Saertex, isotropes Laminat [0°/-45°/90°45°] mit je 1200 g/m$^2$) aufgebracht. Für die Bestimmung der Harzaufnahme wird zwischen dem Schaumstoff und dem Glasgelege, im Gegensatz zur standardmäßigen Herstellung der Paneele, eine Trennfolie eingelegt. Damit ist die Harzaufnahme des reinen Schaumstoffs bestimmbar. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 +/- 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Formkörpern und glasfaserverstärkten Decklagen bestehen.

Zu Beginn werden die Schaumstoffe nach ISO 845 (Stand Oktober 2009) vermessen, um die Rohdichte des Schaumstoffes zu erhalten. Nach dem Aushärten des Harzsystems werden die verarbeiteten Paneele besäumt, um überschüssige Harzansammlungen in den Randbereichen durch nicht passend anliegende Vakuumfolie zu eliminieren. Anschließend werden die Decklagen entfernt und die enthaltenen Schaumstoffe erneut durch ISO 845 vermessen. Aus der Differenz der Dichten ergibt sich die absolute Harzaufnahme. Durch Multiplikation mit der Dicke des Schaumstoffes ergibt sich die entsprechende Harzaufnahme in kg/m$^2$.

Die Versuche zur Harzaufnahme der verstärkten Struktur wurden analog durchgeführt. Es wurde qualitativ bewertet, wieviel Harz die Fasern im Schaumstoff Harz aufnehmen. Dazu wurden die Dicke und die Regelmäßigkeit von imprägnierten, vorher eingebrachten Rovings (E-Glas, OCV, 400 tex) bewertet.

- Der Auszugswiderstand bzw. die benötigte Kraft wurde qualitativ durch einen Pull Out Test eingebrachter Fasern per Hand bestimmt. Die Rovings (E-Glas, OCV, 400 tex) wurden per Hand mit einer Nadel nach EP 1883526 in den Schaumstoff senkrecht zur Oberfläche eingebracht. Nach Einbringung des Rovings über die Rovingschlaufe wurde der Roving manuell aus dem Schaumstoff herausgezogen. Die erforderliche Kraft wurde qualitativ erfasst.

Die Ergebnisse der Versuche sind in Tabelle 2 zu sehen.

Tabelle 2

| Test | Einheit | Beispiel B1 | Vergleichsbeispiel V2 |
|---|---|---|---|
| Dichte (ISO 845) | [kg/m3] | 45 | 45 |
| Geschlossenzelligkeit (ISO 4590) | [%] | + | + |
| Schrumpf (120 °C, 4 h, 0 mbar) | [%] | 3 | 3 |
| Kerbschlagzähigkeit | [J] | ++ | 0 |
| Abrieb gegen sich selbst X - X | [mm] | 1,75 | 2,57 |
| Abrieb gegen sich selbst X - X | [%] | 9 | 13 |
| Abrieb gegen sich selbst X - Y | [mm] | 1,74 | 3,31 |
| Abrieb gegen sich selbst X - Y | [%] | 9 | 16 |
| Abrieb gegen über Stahlplatte mit Rz = 127$\mu$m (Stahl -X) | [mm] | 4,17 | 6,49 |
| Abrieb gegen über Stahlplatte mit Rz = 127$\mu$m (Stahl -X) | [%] | 21 | 32 |

(fortgesetzt)

| Test | Einheit | Beispiel B1 | Vergleichsbeispiel V2 |
|---|---|---|---|
| Abrieb gegen über Stahlplatte mit Rz = 127μm (Stahl - Y) | [mm] | 3,91 | 5,94 |
| Abrieb gegen über Stahlplatte mit Rz = 127μm (Stahl - Y) | [%] | 19 | 29 |
| Chemische Stabilität | [-] | Übersteht Infusionsprozess | Übersteht Infusionsprozess |
| Harzaufnahme allgemein | [g/m²] | 250 | 390 |
| Harzaufnahme mit Verstärkungsstruktur | [g/m²] | gering | moderat |
| Auszugswiderstand | [N] | hoch | moderat |

Die Vorteile des erfindungsgemäßen Schaumstoffs werden aus den gemessenen Daten deutlich. Die Abriebbeständigkeit ist deutlich erhöht, damit verringern sich die Emission und die Transportfähigkeit bzw. das Handling wird verbessert. Zudem weißt der Schaum mit Verstärkungsstrukturen geringere Harzaufnahmen (weniger Gewicht bei gleicher Performance) und höhere Auszugswiderstände (wichtig bei Handling und bei Konfektionierschritten) auf.


**Patentansprüche**

1. Formkörper aus Schaumstoff, **dadurch gekennzeichnet, dass** mindestens eine Faser (F) sich mit einem Faserbereich (FB2) innerhalb des Formkörpers befindet und von dem Schaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei der Schaumstoff hergestellt ist durch Polymerisation einer reaktiven Mischung (rM), die die folgenden Komponenten (A) bis (C) enthält:

   (A) mindestens eine Verbindung mit gegenüber Isocyanaten reaktiven Gruppen, wobei mindestens eine Verbindung mit gegenüber Isocyanaten reaktiven Gruppen ein gewichtsmittleres Molekulargewicht von mindestens 1700 g/mol aufweist,
   (B) mindestens ein Treibmittel und
   (C) mindestens ein Polyisocyanat, das 14 bis 100 Gew.-%, bezogen auf das Gesamtgewicht des mindestens einen Polyisocyanats, mindestens eines Polyisocyanat-Prepolymers enthält,

   wobei die reaktive Mischung (rM) kein weiteres Polyisocyanat außer der Komponente (C) enthält, wobei die Komponente (A) hergestellt ist, ausgehend von einer Verbindung ausgewählt aus der Gruppe bestehend aus Alkoholen, Sacchariden, Zuckeralkoholen und Aminen, und die Komponente (B) der reaktiven Mischung (rM) ausgewählt ist aus der Gruppe bestehend aus n-Pentan, iso-Pentan, Cyclopentan, 1,1,1,3,3-Pentafluorobutan, 1,1,1,3,3-Pentafluoropropan, 1,1,1,2,3,3,3-Heptafluoropropan, Wasser und Hydrofluoroolefinen und die Komponente (C) einen Isocyanat-Index im Bereich von 90 bis 180 aufweist.

2. Formkörper gemäß Anspruch 1, **dadurch gekennzeichnet, dass**

   i) die Oberfläche von mindestens einer Seite des Formkörpers mindestens eine Vertiefung aufweist, vorzugsweise ist die Vertiefung ein Schlitz oder ein Loch, und/oder
   ii) die Gesamtoberfläche des Formkörpers zu mehr als 30 %, vorzugsweise zu mehr als 50 %, mehr bevorzugt zu mehr als 80 %, insbesondere zu mehr als 95 %, geschlossen ist, und/oder
   iii) der Schaumstoff eine Glasübergangstemperatur von mindestens 80°C, bevorzugt von mindestens 110°C und insbesondere von mindestens 130 °C, aufweist, bestimmt mittels Differenzthermoanalyse.

3. Formkörper gemäß Anspruch 1 oder 2, **dadurch gekennzeichnet, dass**

   i) die Faser (F) eine einzelne Faser oder ein Faserbündel, vorzugsweise ein Faserbündel, ist, und/oder
   ii) die Faser (F) eine organische, anorganische, metallische, keramische Faser oder eine Kombination daraus, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser ist; eine polymere Faser ist vorzugsweise eine Faser aus Polyester, Polyamid, Polyaramid, Polyethylen, Polyurethan, Polyvinylchlorid, Polyimid und/oder Polyamidimid; eine Naturfaser ist vorzugsweise eine Faser aus Sisal, Hanf, Flachs, Bambus, Kokos und/oder Jute, und/oder

iii) die Faser (F) als Faserbündel eingesetzt wird mit einer Anzahl von Einzelfasern pro Bündel von mindestens 10, bevorzugt 100 bis 100 000, besonders bevorzugt 300 bis 10 000 bei Glasfasern und 1 000 bis 50 000 bei Kohlenstofffasern, und insbesondere bevorzugt 500 bis 5 000 bei Glasfasern und 2 000 bis 20 000 bei Kohlenstofffasern, und/oder

iv) der Faserbereich (FB1) und der Faserbereich (FB3) jeweils unabhängig voneinander 1 bis 45 %, vorzugsweise 2 bis 40 %, besonders bevorzugt 5 bis 30 %, und der Faserbereich (FB2) 10 bis 98 %, vorzugsweise 20 bis 96 %, besonders bevorzugt 40 bis 90 %, der Gesamtlänge einer Faser (F) ausmachen, und/oder

v) die Faser (F) in einem Winkel $\alpha$ von 0 bis 60°, vorzugsweise von 0 bis 50°, mehr bevorzugt von 0 bis 15° oder von 10 bis 70°, bevorzugt von 30 bis 60 °, besonders bevorzugt von 30 bis 50°, noch mehr bevorzugt von 30 bis 45°, insbesondere von 45°, relativ zur Dickenrichtung (d) des Formkörpers in den Schaumstoff eingebracht ist, und/oder

vi) im Formkörper die erste Seite des Formkörpers, aus der der Faserbereich (FB1) der Faser (F) herausragt, der zweiten Seite des Formkörpers, aus der der Faserbereich (FB3) der Faser (F) herausragt, gegenüberliegt, und/oder

vii) der Formkörper eine Vielzahl von Fasern (F), vorzugsweise von Faserbündeln, enthält und/oder mehr als 10 Fasern (F) oder Faserbündel pro m$^2$ umfasst, bevorzugt mehr als 1 000 pro m$^2$, besonders bevorzugt 4 000 bis 40 000 pro m$^2$.

4. Paneel umfassend mindestens einen Formkörper gemäß einem der Ansprüche 1 bis 3 und mindestens eine Schicht (S1).

5. Paneel gemäß Anspruch 4, **dadurch gekennzeichnet, dass** die Schicht (S1) mindestens ein Harz umfasst, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen.

6. Paneel gemäß Anspruch 5, **dadurch gekennzeichnet, dass** die Schicht (S1) zusätzlich mindestens ein faserförmiges Material enthält, wobei

i) das faserförmige Material Fasern in Form von ein oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m$^2$ enthält, und/oder

ii) das faserförmige Material organische, anorganische, metallische oder keramische Fasern, bevorzugt polymere Fasern, Basaltfasern, Glasfasern, Kohlenstofffasern oder Naturfasern, besonders bevorzugt Glasfasern oder Kohlenstofffasern enthält.

7. Paneel gemäß einem der Ansprüche 4 bis 6, **dadurch gekennzeichnet, dass** das Paneel zwei Schichten (S1) aufweist und die beiden Schichten (S1) jeweils an einer Seite des Formkörpers angebracht sind, die der jeweils anderen Seite im Formkörper gegenüberliegt.

8. Paneel gemäß einem der Ansprüche 4 bis 7, **dadurch gekennzeichnet, dass**

i) der Faserbereich (FB1) der Faser (F) teilweise oder vollständig, vorzugsweise vollständig, mit der ersten Schicht (S1) in Kontakt ist, und/oder

ii) der Faserbereich (FB3) der Faser (F) teilweise oder vollständig, vorzugsweise vollständig, mit der zweiten Schicht (S1) in Kontakt ist, und/oder

iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, besonders bevorzugt aus porösen flächigen Fasermaterialien oder porösen polymeren Folien, insbesondere bevorzugt aus Papier, Glasfasern oder Kohlenstofffasern in Form von Vliesen, Gelegen oder Geweben.

9. Paneel gemäß einem der Ansprüche 4 bis 8, **dadurch gekennzeichnet, dass** der im Paneel enthaltene Formkörper mindestens eine Seite enthält, die nicht mechanisch und/oder thermisch bearbeitet wurde.

10. Verfahren zur Herstellung eines Formkörpers gemäß einem der Ansprüche 1 bis 3 **dadurch gekennzeichnet, dass** mindestens eine Faser (F) in den Schaumstoff teilweise eingebracht wird, wodurch sich die Faser (F) mit dem Faserbereich (FB2) innerhalb des Formkörpers befindet und von dem Schaumstoff umschlossen ist, während der Faserbereich (FB1) der Faser (F) aus einer ersten Seite des Formkörpers herausragt und der Faserbereich (FB3) der Faser (F) aus einer zweiten Seite des Formkörpers herausragt.

11. Verfahren gemäß Anspruch 10, **dadurch gekennzeichnet, dass** das teilweise Einbringen von mindestens einer Faser (F) in den Schaumstoff durch Einnähen unter Verwendung einer Nadel erfolgt,
vorzugsweise erfolgt das teilweise Einbringen durch die Schritte a) bis e):

a) gegebenenfalls Aufbringen von mindestens einer Schicht (S2) auf mindestens eine Seite des Schaumstoffs,
b) Erzeugung von einem Loch je Faser (F) im Schaumstoff und gegebenenfalls der Schicht (S2), wobei sich das Loch von einer ersten Seite zu einer zweiten Seite des Schaumstoffs und gegebenenfalls durch die Schicht (S2) erstreckt,
c) Bereitstellung von mindestens einer Faser (F) auf der zweiten Seite des Schaumstoffs,
d) Durchführen einer Nadel von der ersten Seite des Schaumstoffs durch das Loch zur zweiten Seite des Schaumstoffs und gegebenenfalls Durchführen der Nadel durch die Schicht (S2),
e) Befestigen von mindestens einer Faser (F) an der Nadel auf der zweiten Seite des Schaumstoffs, und
f) Rückführen der Nadel samt Faser (F) durch das Loch, so dass die Faser (F) sich mit dem Faserbereich (FB2) innerhalb des Formkörpers befindet und von dem Schaumstoffs umschlossen ist, während der Faserbereich (FB1) der Faser (F) aus einer ersten Seite des Formkörpers oder gegebenenfalls aus der Schicht (S2) herausragt und der Faserbereich (FB3) der Faser (F) aus einer zweiten Seite des Formkörpers herausragt,

besonders bevorzugt werden die Schritte b) und d) gleichzeitig durchgeführt.

12. Verfahren gemäß Anspruch 10 oder 11, **dadurch gekennzeichnet, dass** die Vertiefungen im Formkörper gemäß Anspruch 3 teilweise oder vollständig vor dem Einbringen von mindestens einer Faser (F) in den Schaumstoff eingebracht werden.

13. Verfahren zur Herstellung eines Paneels gemäß einem der Ansprüche 4 bis 9, **dadurch gekennzeichnet, dass** die mindestens eine Schicht (S1) als reaktives, viskoses Harz auf einen Formkörper gemäß einem der Ansprüche 1 bis 4 erzeugt, aufgebracht und ausgehärtet wird, vorzugsweise durch Flüssigimprägnierverfahren, besonders bevorzugt durch druck- bzw. vakuumunterstützte Imprägnierverfahren, insbesondere bevorzugt durch Vakuuminfusion oder druckunterstützte Injektionsverfahren, am meisten bevorzugt durch Vakuuminfusion.

14. Verwendung eines Formkörpers gemäß einem der Ansprüche 1 bis 3 oder eines Paneels gemäß einem der Ansprüche 4 bis 9 für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

**Claims**

1. A molding made of foam, wherein at least one fiber (F) is with a fiber region (FB2) located inside the molding and surrounded by the foam while a fiber region (FB1) of the fiber (F) projects from a first side of the molding and a fiber region (FB3) of the fiber (F) projects from a second side of the molding, wherein the foam has been produced by polymerization of a reactive mixture (rM) which comprises the following components (A) to (C):

(A) at least one compound having isocyanate-reactive groups, wherein at least one compound having isocyanate-reactive groups has a weight-average molecular weight of at least 1700 g/mol,
(B) at least one blowing agent and
(C) at least one polyisocyanate which comprises 14% to 100% by weight based on the total weight of the at least one polyisocyanate of at least one polyisocyanate prepolymer,

wherein the reactive mixture (rM) comprises no further polyisocyanate other than component (C), wherein the component (A) is produced from a compound selected from the group consisting of alcohols, saccharides, sugar alcohols and amines and the component (B) of the reactive mixture (rM) is selected from the group consisting of n-pentane, isopentane, cyclopentane, 1,1,1,3,3-pentafluorobutane, 1,1,1,3,3-pentafluoropropane, 1,1,1,2,3,3,3-heptafluoropropane, water and hydrofluoroolefins and the component (C) has an isocyanate index in the range from 90 to 180.

**2.** The molding according to claim 1, wherein

i) the surface of at least one side of the molding has at least one depression, the depression preferably being a slot or a hole, and/or
ii) the total surface area of the molding is closed to an extent of more than 30%, preferably to an extent of more than 50%, more preferably to an extent of more than 80%, in particular to an extent of more than 95%, and/or
iii) the foam has a glass transition temperature of at least 80°C, preferably of at least 110°C and in particular of at least 130°C, determined by differential scanning calorimetry.

**3.** The molding according to claim 1 or 2, wherein

i) the fiber (F) is a single fiber or a fiber bundle, preferably a fiber bundle, and/or
ii) the fiber (F) is an organic, inorganic, metallic or ceramic fiber or a combination thereof, preferably a polymeric fiber, basalt fiber, glass fiber, carbon fiber or natural fiber, especially preferably a polyaramid fiber, glass fiber, basalt fiber or carbon fiber; a polymeric fiber is preferably a fiber of polyester, polyamide, polyaramid, polyethylene, polyurethane, polyvinyl chloride, polyimide and/or polyamide imide; a natural fiber is preferably a fiber of sisal, hemp, flax, bamboo, coconut and/or jute, and/or
iii) the fiber (F) is employed in the form of a fiber bundle having a number of individual fibers per bundle of at least 10, preferably 100 to 100 000, particularly preferably 300 to 10 000, in the case of glass fibers and 1000 to 50 000 in the case of carbon fibers and especially preferably 500 to 5000 in the case of glass fibers and 2000 to 20 000 in the case of carbon fibers, and/or
iv) the fiber region (FB1) and the fiber region (FB3) each independently of one another account for 1% to 45%, preferably 2% to 40%, particularly preferably 5% to 30% and the fiber region (FB2) accounts for 10% to 98%, preferably 20% to 96%, particularly preferably 40% to 90%, of the total length of a fiber (F), and/or
v) the fiber (F) has been introduced into the foam at an angle $\alpha$ of 0° to 60°, preferably of 0° to 50°, more preferably of 0° to 15° or of 10° to 70°, preferably of 30° to 60°, particularly preferably of 30° to 50°, yet more preferably of 30° to 45°, in particular of 45°, relative to the thickness direction (d) of the molding, and/or
vi) in the molding the first side of the molding from which the fiber region (FB1) of the fiber (F) projects is opposite the second side of the molding from which the fiber region (FB3) of the fiber (F) projects, and/or
vii) the molding comprises a multitude of fibers (F), preferably of fiber bundles, and/or comprises more than 10 fibers (F) or fiber bundles per $m^2$, preferably more than 1000 per $m^2$, particularly preferably 4000 to 40 000 per $m^2$.

**4.** A panel comprising at least one molding according to any of claims 1 to 3 and at least one layer (S1).

**5.** The panel according to claim 4, wherein the layer (S1) comprises at least one resin, the resin preferably being a reactive thermosetting or thermoplastic resin, the resin more preferably being based on epoxides, acrylates, polyurethanes, polyamides, polyesters, unsaturated polyesters, vinyl esters or mixtures thereof, the resin in particular being an amine-curing epoxy resin, a latent-curing epoxy resin, an anhydride-curing epoxy resin or a polyurethane composed of isocyanates and polyols.

**6.** The panel according to claim 5, wherein the layer (S1) additionally comprises at least one fibrous material, wherein

i) the fibrous material comprises fibers in the form of one or more plies of chopped fibers, nonwovens, non-crimp fabrics, knits and/or wovens, preferably in the form of non-crimp fabrics or wovens, particularly preferably in the form of non-crimp fabrics or wovens having a basis weight per non-crimp fabric/woven of 150 to 2500 $g/m^2$, and/or
ii) the fibrous material comprises organic, inorganic, metallic or ceramic fibers, preferably polymeric fibers, basalt fibers, glass fibers, carbon fibers or natural fibers, particularly preferably glass fibers or carbon fibers.

**7.** The panel according to any of claims 4 to 6, wherein the panel comprises two layers (S1) and the two layers (S1) are each attached at a side of the molding that is opposite the respective other side of the molding.

**8.** The panel according to any of claims 4 to 7, wherein

i) the fiber region (FB1) of the fiber (F) is in partial or complete, preferably complete, contact with the first layer (S1), and/or

ii) the fiber region (FB3) of the fiber (F) is in partial or complete, preferably complete, contact with the second layer (S1), and/or

iii) the panel comprises between at least one side of the molding and at least one layer (S1) at least one layer (S2), wherein the layer (S2) is preferably composed of sheetlike fiber materials or polymeric films, particularly preferably of porous sheetlike fiber materials or porous polymeric films, especially preferably of paper, glass fibers or carbon fibers in the form of nonwovens, non-crimp fabrics or wovens.

9. The panel according to any of claims 4 to 8, wherein the molding present in the panel comprises at least one side that has not been subjected to mechanical and/or thermal processing.

10. A process for producing a molding according to any of claims 1 to 3, wherein at least one fiber (F) is partially introduced into the foam with the result that the fiber (F) is with the fiber region (FB2) located inside the molding and surrounded by the foam while the fiber region (FB1) of the fiber (F) projects from a first side of the molding and the fiber region (FB3) of the fiber (F) projects from a second side of the molding.

11. The process according to claim 10, wherein the partial introduction of at least one fiber (F) into the foam is effected by sewing-in using a needle,

the partial introduction preferably being effected by steps a) to e):

a) optionally applying at least one layer (S2) to at least one side of the foam,

b) producing one hole per fiber (F) in the foam and optionally in the layer (S2), wherein the hole extends from a first side to a second side of the foam and optionally through the layer (S2),

c) providing at least one fiber (F) on the second side of the foam,

d) passing a needle from the first side of the foam through the hole to the second side of the foam and optionally passing the needle through the layer (S2),

e) securing at least one fiber (F) on the needle on the second side of the foam, and

f) returning the needle along with the fiber (F) through the hole, so that the fiber (F) is with the fiber region (FB2) located inside the molding and surrounded by the foam while the fiber region (FB1) of the fiber (F) projects from a first side of the molding or optionally from the layer (S2) and the fiber region (FB3) of the fiber (F) projects from a second side of the molding,

simultaneous performance of steps b) and d) being particularly preferred.

12. The process according to claim 10 or 11, wherein the depressions in the molding according to claim 3 are introduced into the foam partially or completely before the introduction of at least one fiber (F).

13. A process for producing a panel according to any of claims 4 to 9, wherein the at least one layer (S1) is produced, applied and cured on a molding according to any of claims 1 to 4 in the form of a reactive viscous resin, preferably by liquid impregnation methods, particularly preferably by pressure- or vacuum-assisted impregnation methods, especially preferably by vacuum infusion or pressure-assisted injection methods, most preferably by vacuum infusion.

14. The use of a molding according to any of claims 1 to 3 or of a panel according to any of claims 4 to 9 for rotor blades in wind turbines, in the transport sector, in the construction sector, in automobile construction, in shipbuilding, in rail vehicle construction, for container construction, for sanitary installations and/or in aerospace.

**Revendications**

1. Corps moulé de mousse, **caractérisé en ce qu'**au moins une fibre (F) se trouve avec une zone de fibre (FB2) à l'intérieur du corps moulé et est entourée par la mousse, tandis qu'une zone de fibre (FB1) de la fibre (F) fait saillie d'un premier côté du corps moulé et une zone de fibre (FB3) de la fibre (F) fait saillie d'un deuxième côté du corps moulé, la mousse étant préparée par polymérisation d'un mélange réactif (rM) qui contient les composants suivants (A) à (C) :

(A) au moins un composé comportant des groupes réactifs envers des isocyanates, au moins un composé comportant des groupes réactifs envers des isocyanates présentant un poids moléculaire moyen en poids d'au moins 1 700 g/mole,
(B) au moins un agent gonflant et
(C) au moins un polyisocyanate, qui contient 14 à 100 % en poids, par rapport au poids total de l'au moins un polyisocyanate, d'au moins un prépolymère de polyisocyanate,

le mélange réactif (rM) ne contenant aucun autre polyisocyanate outre le composant (C), le composant (A) étant préparé à partir d'un composé choisi dans le groupe constitué par des alcools, des saccharides, des alcools de sucre et des amines, et le composant (B) du mélange réactif (rM) étant choisi dans le groupe constitué par le n-pentane, l'iso-pentane, le cyclopentane, le 1,1,1,3,3-pentafluorobutane, le 1,1,1,3,3-pentafluoropropane, le 1,1,1,2,3,3,3-heptafluoropropane, l'eau et des hydrofluorooléfines et le composant (C) présentant un indice d'isocyanate dans la plage de 90 à 180.

2. Corps moulé selon la revendication 1, **caractérisé en ce que**

   i) la surface d'au moins un côté du corps moulé présente au moins un évidement, de préférence l'évidement étant une fente ou un trou, et/ou
   ii) la surface totale du corps moulé est fermée à raison de plus de 30 %, de préférence à raison de plus de 50 %, plus préférablement à raison de plus de 80 %, en particulier à raison de plus de 95 %, et/ou
   iii) la mousse présente une température de transition vitreuse d'au moins 80 °C, préférablement d'au moins 110 °C et en particulier d'au moins 130 °C, déterminée par analyse thermique différentielle.

3. Corps moulé selon la revendication 1 ou 2, **caractérisé en ce que**

   i) la fibre (F) est une fibre unique ou un paquet de fibres, de préférence un paquet de fibres, et/ou
   ii) la fibre (F) est une fibre organique, inorganique, métallique, céramique ou une combinaison correspondante, préférablement une fibre polymérique, une fibre de basalte, une fibre de verre, une fibre de carbone ou une fibre naturelle, en particulier préférablement une fibre de polyaramide, une fibre de verre, une fibre de basalte ou une fibre de carbone ; une fibre polymérique étant de préférence une fibre de polyester, de polyamide, de polyaramide, de polyéthylène, de polyuréthane, de poly(chlorure de vinyle), de polyimide et/ou de polyamidimide ; une fibre naturelle étant de préférence une fibre de sisal, de chanvre, de lin, de bambou, de coco et/ou de jute, et/ou
   iii) la fibre (F) est utilisée comme paquet de fibres comportant un nombre de fibres individuelles par paquet d'au moins 10, préférablement de 100 à 100 000, particulièrement préférablement de 300 à 10 000 pour des fibres de verre et 1 000 à 50 000 pour des fibres de carbone, et en particulier préférablement 500 à 5 000 pour des fibres de verre et 2 000 à 20 000 pour des fibres de carbone, et/ou
   iv) la zone de fibre (FB1) et la zone de fibre (FB3) représentent à chaque fois indépendamment l'une de l'autre 1 à 45 %, de préférence 2 à 40 %, particulièrement préférablement 5 à 30 %, et la zone de fibre (FB2) représentant 10 à 98 %, de préférence 20 à 96 %, particulièrement préférablement 40 à 90 %, de la longueur totale d'une fibre (F), et/ou
   v) la fibre (F) est introduite dans la mousse en un angle $\alpha$ de 0 à 60°, de préférence de 0 à 50°, plus préférablement de 0 à 15° ou de 10 à 70°, préférablement de 30 à 60°, particulièrement préférablement de 30 à 50°, encore plus préférablement de 30 à 45°, en particulier de 45°, par rapport à la direction d'épaisseur (d) du corps moulé, et/ou
   vi) dans le corps moulé, le premier côté du corps moulé, duquel la zone de fibre (FB1) de la fibre (F) fait saillie, se trouve à l'opposé du deuxième côté du corps moulé, duquel la zone de fibre (FB3) de la fibre (F) fait saillie, et/ou
   vii) le corps moulé contient une pluralité de fibres (F), de préférence de paquets de fibres et/ou comprend plus de 10 fibres (F) ou paquets de fibres par m$^2$, préférablement plus de 1 000 par m$^2$, particulièrement préférablement de 4 000 à 40 000 par m$^2$.

4. Panneau comprenant au moins un corps moulé selon l'une quelconque des revendications 1 à 3 et au moins une couche (S1).

5. Panneau selon la revendication 4, **caractérisé en ce que** la couche (S1) comprend au moins une résine, de préférence la résine est une résine réactive duroplastique ou thermoplastique, plus préférablement la résine est à base d'époxydes, d'acrylates, de polyuréthanes, de polyamides, de polyesters, de polyesters insaturés, d'esters de vinyle ou de mélanges correspondants, en particulier la résine est une résine époxy durcissant de manière aminique, une résine époxy durcissant de manière latente, une résine époxy durcissant de manière anhydre ou un polyuréthane à base d'isocyanates et de polyols.

**6.** Panneau selon la revendication 5, **caractérisé en ce que** la couche (S1) contient en plus au moins un matériau fibreux,

i) le matériau fibreux contenant des fibres sous forme d'une ou plusieurs couches de fibres coupées, de non-tissés, de nappes, de tricots et/ou de tissus, préférablement sous forme de nappes ou de tissus, particulièrement préférablement sous forme de nappes ou de tissus comportant un poids surfacique par nappe ou tissu de 150 à 2 500 g/m$^2$, et/ou

ii) le matériau fibreux contenant des fibres organiques, inorganiques, métalliques ou céramiques, préférablement des fibres polymériques, des fibres de basalte, des fibres de verre, des fibres de carbone ou des fibres naturelles, particulièrement préférablement des fibres de verre ou des fibres de carbone.

**7.** Panneau selon l'une quelconque des revendications 4 à 6, **caractérisé en ce que** le panneau présente deux couches (S1) et les deux couches (S1) sont montées à chaque fois sur un côté du corps moulé qui est à l'opposé de l'autre côté respectif dans le corps moulé.

**8.** Panneau selon l'une quelconque des revendications 4 à 7, **caractérisé en ce que**

i) la zone de fibre (FB1) de la fibre (F) est en contact partiel ou total, de préférence total, avec la première couche (S1), et/ou

ii) la zone de fibre (FB3) de la fibre (F) est en contact partiel ou total, de préférence total, avec la deuxième couche (S1), et/ou

iii) le panneau présente au moins une couche (S2) entre au moins un côté du corps moulé et au moins une couche (S1), de préférence, la couche (S2) est composée de matériaux fibreux à plat ou de feuilles polymériques, particulièrement préférablement de matériaux fibreux à plat poreux ou de feuilles polymériques poreuses, en particulier préférablement de papier, de fibres de verre ou de fibres de carbone sous forme de non-tissés, de nappes ou de tissus.

**9.** Panneau selon l'une quelconque des revendications 4 à 8, **caractérisé en ce que** le corps moulé contenu dans le panneau contient au moins un côté qui n'a pas été traité mécaniquement et/ou thermiquement.

**10.** Procédé pour la fabrication d'un corps moulé selon l'une quelconque des revendications 1 à 3, **caractérisé en ce qu'**au moins une fibre (F) est introduite partiellement dans la mousse, moyennant quoi la fibre (F) se trouve à l'intérieur du corps moulé avec la zone de fibre (FB2) et est entourée par la mousse, tandis que la zone de fibre (FB1) de la fibre (F) fait saillie d'un premier côté du corps moulé et la zone de fibre (FB3) de la fibre (F) fait saillie d'un deuxième côté du corps moulé.

**11.** Procédé selon la revendication 10, **caractérisé en ce que** l'introduction partielle d'au moins une fibre (F) dans la mousse est réalisée par couture en utilisant une aiguille,
de préférence, l'introduction partielle est réalisée par les étapes a) à e) :

a) éventuellement application d'au moins une couche (S2) sur au moins un côté de la mousse,
b) génération d'au moins un trou par fibre (F) dans la mousse et éventuellement la couche (S2), le trou s'étendant d'un premier côté jusqu'à un deuxième côté de la mousse et éventuellement par la couche (S2),
c) fourniture d'au moins une fibre (F) sur le deuxième côté de la mousse,
d) passage d'une aiguille du premier côté de la mousse à travers le trou jusqu'au deuxième côté de la mousse et éventuellement passage de l'aiguille par la couche (S2),
e) fixation d'au moins une fibre (F) au niveau de l'aiguille sur le deuxième côté de la mousse, et
f) passage à nouveau de l'aiguille avec la fibre (F) par le trou, de sorte que la fibre (F) se trouve avec la zone de fibre (FB2) à l'intérieur du corps moulé et soit entouré de la mousse, tandis que la zone de fibre (FB1) de la fibre (F) fait saillie d'un premier côté du corps moulé ou éventuellement de la couche (S2) et la zone de fibre (FB3) de la fibre (F) fait saillie d'un deuxième côté du corps moulé,

particulièrement préférablement, les étapes b) et d) sont réalisées simultanément.

**12.** Procédé selon la revendication 10 ou 11, **caractérisé en ce que** les évidements dans le corps moulé selon la revendication 3 sont introduits dans la mousse partiellement ou totalement avant l'introduction d'au moins une fibre (F).

**13.** Procédé pour la fabrication d'un panneau selon l'une quelconque des revendications 4 à 9, **caractérisé en ce que** l'au moins une couche (S1) est générée, appliquée est durcie, sur un corps moulé selon l'une quelconque des revendications 1 à 4, en tant que résine visqueuse réactive, de préférence par un procédé d'imprégnation liquide, particulièrement préférablement par un procédé d'imprégnation assisté par une pression ou assisté par un vide, en particulier préférablement par infusion sous vide ou un procédé d'injection assisté par une pression, le plus préférablement par infusion sous vide.

**14.** Utilisation d'un corps moulé selon l'une quelconque des revendications 1 à 3 ou d'un panneau selon l'une quelconque des revendications 4 à 9 pour des pales de rotor dans des éoliennes, dans le secteur des transports, dans le secteur de la construction, dans la construction automobile, dans la construction navale, dans la construction ferroviaire, pour la construction de containers, pour des installations sanitaires et/ou dans l'aéronautique et l'aérospatial.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006125561 A
- WO 2011012587 A
- WO 2012138445 A
- GB 2455044 A
- WO 2009047483 A
- US 7201625 B
- US 6767623 B
- EP 2420531 A
- EP 2480531 A
- WO 2005056653 A
- US 3030256 A
- US 6187411 B
- US 20100196652 A
- WO 12134878 A2
- EP 1883526 A

**In der Beschreibung aufgeführte Nicht-Patentliteratur**

- **PENCZEK et al.** *Advances in Polymer Science,* 2005, vol. 184, 1-95
- **PHAM et al.** *Ullmann's Encyclopedia of Industrial Chemistry,* 2012, vol. 13
- Wiley Encyclopedia of Composites. Wiley, 2012
- **PARNAS et al.** *Liquid Composite Moulding,* 2000
- **WILLIAMS et al.** *Composites Part A,* 1997, vol. 27, 517-524